# EUROPEAN PATENT SPECIFICATION

(11) **EP 4 489 383 B1**
(45) Date of publication and mention of the grant of the patent: **12.08.2026**
(21) Application number: 23830256.6
(22) Date of filing: 27.06.2023
(51) Int. Cl.: H04M 1/02, G06F 1/16, F16C 11/04

(54) **FOLDABLE APPARATUS AND ELECTRONIC DEVICE**
FALTBARE VORRICHTUNG UND ELEKTRONISCHE VORRICHTUNG
APPAREIL PLIABLE ET DISPOSITIF ÉLECTRONIQUE

(30) Priority: 30.06.2022 CN 202210764332
(43) Date of publication of application: 08.01.2025
(73) Proprietor: Huawei Technologies Co., Ltd., Shenzhen, Guangdong 518129 (CN)
(72) Inventor: LIAO, Changliang, Shenzhen, Guangdong 518129 (CN); ZHONG, Ding, Shenzhen, Guangdong 518129 (CN); JIAO, Tao, Shenzhen, Guangdong 518129 (CN); JIANG, WenJie, Shenzhen, Guangdong 518129 (CN); LUO, Yufeng, Shenzhen, Guangdong 518129 (CN)
(74) Representative: Pfenning, Meinig & Partner mbB
(86) International application number: PCT/CN2023/102810
(87) International publication number: WO 2024/002079

(56) References cited:
- WO-A1-2022/001769
- CN-A- 113 053 238
- CN-A- 113 194 183
- CN-A- 114 006 963
- CN-U- 215 058 843

## Description

### TECHNICAL FIELD

This application relates to an electronic device having a flexible display and a foldable apparatus.

### BACKGROUND

With development of flexible display technologies, a foldable apparatus based on a flexible display has become a new technological innovation point in the industry. An electronic device with a foldable function usually implements folding and unfolding between main bodies by using a foldable apparatus. However, a large quantity of components are usually required for an existing foldable apparatus to implement folding and unfolding, and this results in a complex structure of a foldable mechanism, and is unfavorable to a lightweight design of a foldable terminal. How to design a foldable apparatus with a simplified structure and a thin size is a direction of research and development in the industry.

CN 215058843 U discloses a middle plate synchronous drop-shaped infolding rotating mechanism which comprises a rotating shaft cover. Rotating shafts are arranged at the two ends of the rotating shaft cover. The rotating shafts are rotationally connected with middle plates and two sets of side plates. Each rotating shaft comprises an arc groove movable frame, a sliding block movable frame and an end face movable frame which are symmetrically distributed on the two sides. The sliding block movable frames are connected with gear shafts respectively; longitudinal sliding grooves are formed in the two ends of the rotating shaft cover. Longitudinal sliding blocks slide in the longitudinal sliding grooves so that the middle plate can move up and down and avoid the screen. The arc groove movable frame is provided with a first arc groove and a transverse sliding groove, the end face movable frame is provided with a second arc groove, the side plate is provided with a first arc shaft and a second arc shaft, the first arc shaft is in running fit in the first arc groove, the second arc shaft is in running fit in the second arc groove, and the sliding block movable frame is provided with a transverse sliding block. The transverse sliding block is in sliding fit in the transverse sliding groove to drive the sliding block movable frame and the arc groove movable frame to rotate so that synchronous rotation of the middle plate in the range from 0 degree to 180 degrees can be achieved.

### SUMMARY

Embodiments of this application provide a foldable apparatus and an electronic device. The invention is set out in the appended set of claims.

According to a first aspect, an embodiment of this application provides a foldable apparatus for an electronic device having a flexible display, which is configured to implement relative folding and unfolding of the electronic device, where the foldable apparatus includes a first support plate, a middle support plate, a second support plate, a main shaft, a first hinge connecting rod, a second hinge connecting rod, a first gear connecting rod, and a second gear connecting rod;
the first support plate and the second support plate are distributed on two sides of the main shaft, one end of the first hinge connecting rod is rotatably connected to the first support plate, the other end of the first hinge connecting rod is rotatably connected to the main shaft, one end of the second hinge connecting rod is rotatably connected to the second support plate, and the other end of the second hinge connecting rod is rotatably connected to the main shaft;
the middle support plate is slidably connected to the main shaft, the middle support plate includes a first tooth part and a second tooth part, when the foldable apparatus is in an unfolded state, the first tooth part faces the first support plate, and the second tooth part faces the second support plate, and the first support plate, the middle support plate, and the second support plate are jointly configured to support the flexible display in the unfolded state;
the first gear connecting rod includes a first gear and a first connecting rod, the first gear is rotatably connected to the main shaft, the first gear is meshed with the first tooth part of the middle support plate, and the first connecting rod is slidably connected to the first support plate;
the second gear connecting rod includes a second gear and a second connecting rod, the second gear is rotatably connected to the main shaft, the second gear is meshed with the second tooth part of the middle support plate, and the second connecting rod is slidably connected to the second support plate;
a first rotation axis center of the first hinge connecting rod relative to the main shaft and a second rotation axis center that is of the first gear of the first gear connecting rod and that is relative to the main shaft are different, but both the first rotation axis center and the second rotation axis center are in an axial direction of the main shaft;
a third rotation axis center of the second hinge connecting rod relative to the main shaft and a fourth rotation axis center that is of the second gear of the second gear connecting rod and that is relative to the main shaft are different, but both the third rotation axis center and the fourth rotation axis center are in the axial direction of the main shaft; and
in a process in which the first support plate and the second support plate are relatively folded, the first hinge connecting rod and the second hinge connecting rod rotate relative to the main shaft, the first support plate slides relative to the first connecting rod, the second support plate slides relative to the second connecting rod, the first gear is meshed with the first tooth part, and the second gear is meshed with the second tooth part, so that the middle support plate slides relative to the main shaft, where a sliding direction is a direction in which the middle support plate is away from the flexible display.

In this application, the first hinge connecting rod and the second hinge connecting rod are respectively connected between the first support plate and the main shaft and between the second support plate and the main shaft, so that the first support plate and the second support plate are rotatably connected relative to the main shaft. In addition, the first gear connecting rod and the second gear connecting rod are connected between the middle support plate and the first support plate and between the middle support plate and the second support plate, so that in a process of unfolding or folding of the foldable apparatus and a process in which the first support plate and the second support plate rotate relative to the main shaft, the first gear connecting rod and the second gear connecting rod can drive the middle support plate to slide relative to the main shaft, and the first hinge connecting rod and the second hinge connecting rod are disposed with different axial centers and the first gear connecting rod and the second gear connecting rod are disposed with different axial centers, so that the first hinge connecting rod and the second hinge connecting rod can drive, in a folding process, the first gear connecting rod and the second gear connecting rod to slide in a direction away from the main shaft relative to the first support plate and the second support plate. This increases an overall length of the foldable apparatus, so that in a folded state, the middle support plate can sink relative to the main shaft, and the first support plate and the second support plate slide in the direction away from the main shaft, thereby increasing space and providing accommodation space for the flexible display.

In addition, the structure of this application further facilitates a simplified structural design and a miniaturized size. Specifically, according to the foldable apparatus provided in this application, the middle support plate can move relative to the main shaft in the processes of folding and unfolding through meshing between the middle support plate, the first tooth part, and the second tooth part and the first gear connecting rod and the second gear connecting rod. A meshing structure between the first tooth part and the first gear connecting rod, and a meshing structure between the second tooth part and the second gear connecting rod not only has a function of driving the middle support plate to move, but also can enable the first support plate and the second support plate to synchronously rotate, and a gear matching structure can also be a structure for providing damping force in the folding and unfolding processes of the foldable apparatus. Therefore, the meshing structure in this solution can implement a plurality of functions, and a synchronization mechanism and a damping mechanism do not need to be additionally disposed in the foldable apparatus. This helps implement a simplified structure and a thin size of the foldable apparatus.

In a possible implementation, in a process in which the first support plate and the second support plate are relatively unfolded, the first hinge connecting rod and the second hinge connecting rod rotate relative to the main shaft, the first support plate slides relative to the first connecting rod, the second support plate slides relative to the second connecting rod, the first gear is meshed with the first tooth part, and the second gear is meshed with the second tooth part, so that the middle support plate slides relative to the main shaft, where a sliding direction is a direction in which the middle support plate faces the flexible display. In this solution, the process in which the first support plate and the second support plate are relatively unfolded and a movement principle of the foldable apparatus are limited, and the middle support plate can improve a function of supporting the flexible display in an unfolded state, so that the foldable apparatus has good structural stability.

In a possible implementation, the first hinge connecting rod includes a first rotating arm, the first rotating arm is of an arc-shaped structure, the main shaft includes a first arc-shaped sliding slot, and the first rotating arm matches the first arc-shaped sliding slot, to implement a rotatable connection between the first hinge connecting rod and the main shaft. In this solution, a specific solution in which the first hinge connecting rod is rotatably connected to the main shaft is limited, and is implemented by using a solution of a virtual hinge, and matching of the first arc-shaped sliding slot and the first rotating arm forms a virtual hinge structure.

In a possible implementation, the first hinge connecting rod includes a shaft hole, and the first hinge connecting rod is rotatably connected to the first support plate through the shaft hole and a first shaft passing through the shaft hole. In this solution, a specific connection solution between the first hinge connecting rod and the first support plate is limited. A hinge connection between the first hinge connecting rod and the first support plate is implemented through the first hinge. A connection manner is simple, and stability and reliability of an overall structure can be ensured.

In a possible implementation, in a folded state of the foldable apparatus, space is formed between the first support plate and the second support plate, and the flexible display is U-shaped in space enclosed by the first support plate, the middle support plate, and the second support plate. In this solution, a specific usage environment of the foldable apparatus is limited, and is specifically used in a tri-fold or quad-fold electronic device. The space formed between the first support plate and the second support plate may be used to accommodate a main body of the electronic device, and can accommodate one main body (for a tri-fold product) or two main bodies (for a quad-fold product).

In a possible implementation, the main shaft includes an accommodation part, accommodation space is disposed in the accommodation part, the accommodation space is used to accommodate the middle support plate, the accommodation part includes an open end and a bottom wall, the open end and the bottom wall are disposed opposite to each other in a first direction, the first direction is a thickness direction of the foldable apparatus in the unfolded state, and in the folded state, the middle support plate is in the accommodation space, avoidance space is formed between the middle support plate and the open end, and the avoidance space is used to accommodate a part of the flexible display. In this solution, a bent part of the part of the flexible display in the folded state is sunk into the accommodation space of the main shaft, so that space between the bent part of the flexible display and the middle support plate is shielded by the main shaft and is not exposed. In this solution, a folding position of the electronic device can be of a compact structure, have a good degree of fitting, and have no obvious hold, which can improve customer experience.

In a possible implementation, the second rotation axis center is closer to the bottom wall than the first rotation axis center, and the fourth rotation axis center is closer to the bottom wall than the third rotation axis center. In this solution, a position relationship between the second rotation axis center and the first rotation axis center, and a position relationship between the third rotation axis center and the fourth rotation axis center are limited, and a specific rotatable connection solution is provided. This facilitates a design of a thin size of the foldable apparatus.

In a possible implementation, in the folded state, all or a part greater than 80% of a gap formed between the middle support plate and the flexible display is located inside the avoidance space. In this solution, a foldable apparatus with a more compact structure can be obtained.

In a possible implementation, in the folded state, the middle support plate is in contact with the bottom wall. In the folded state of the foldable apparatus obtained in this solution, a design in which the middle support plate is in contact with the bottom wall can make an overall structure thin, and that the middle support plate is in contact with the main shaft can improve strength of the main shaft and the middle support plate, and deformation is not easy to occur.

In a possible implementation, the first direction is a thickness direction of the middle support plate, the middle support plate includes a first part and a second part, a thickness of the first part is greater than a thickness of the second part, the first part and the second part are disposed adjacently in a length direction of the middle support plate, the first tooth part and the second tooth part are disposed at the first part, the first tooth part and the second tooth part are disposed back to back in a width direction of the middle support plate, and both the length direction and the width direction of the middle support plate are perpendicular to the first direction. In this solution, the middle support plate is limited to have the first part and the second part with different thicknesses, and it is emphasized that the first tooth part and the second tooth part are disposed at the thicker first part. Since sizes of the first tooth part and the second tooth part in the first direction can influence a stroke of the middle support plate in a process of switching between the folded state and the unfolded state, to ensure that the middle support plate can have a large stroke and highlight a thinning design of an overall structure of the foldable apparatus, the thickness of the first part is set to be greater than the thickness of the second part, so that the sizes of the first tooth part and the second tooth part in the first direction can be increased. In addition, because the thickness of the second part is smaller, an overall weight of the middle support plate is light. This helps implement lightweight and thinning designs of the foldable apparatus.

In a possible implementation, the bottom wall includes a first bottom part and a second bottom part, and in the folded state, the first bottom part is in contact with the first part, the second bottom part is in contact with the second part, the first direction is a thickness direction of the bottom wall, a thickness of the first bottom part is less than a thickness of the second bottom part, and a step-shaped structure is formed between a surface that is of the first bottom part and that is in contact with the first part and a surface that is of the second bottom part and that is in contact with the second part. In this solution, based on the design in which the first part and the second part of the middle support plate have different thicknesses, the thicknesses of the first bottom part and the second bottom part of the main shaft are set to be different, the first bottom part with the smaller thickness is in contact with the first part, and the second bottom part with the larger thickness is in contact with the second part. In this way, in a state in which the main shaft and the middle support plate are combined, namely, the folded state, the main shaft and the middle support plate together form a structure with a uniform thickness, overall weight distribution of the foldable apparatus is uniform, and strength and structural stability of the foldable apparatus can be ensured while the structure is simple.

In a possible implementation, in the width direction of the middle support plate, the first part includes a first matching part, a main body, and a second matching part that are sequentially connected, the first tooth part is located on a surface that is of the first matching part and that is away from the main body, the second tooth part is located on a surface that is of the second matching part and that is away from the main body, the main body and the second part are connected and have an equal width, the first part includes a first sliding matching structure and a second sliding matching structure, the first sliding matching structure is located in a position in which the first matching part is adjacent to the main body or is located in the first matching part, the second sliding matching structure is located in a position in which the second matching part is adjacent to the main body or is located in the second matching part, the first sliding matching structure is configured to match a first position-limiting structure on the main shaft, and the second sliding matching structure is configured to match a second position-limiting structure on the main shaft, to perform position limiting on relative sliding between the middle support plate and the main shaft. In this solution, the first sliding matching structure is disposed at the first matching part or the position in which the first matching part is adjacent to the main body, so that the first sliding matching structure is closer to the first tooth part, and the second sliding matching part is closer to the second tooth part in a same design. This helps ensure smoothness of meshing between the first tooth part and the first gear and smoothness of meshing between the second tooth part and the second gear. It can be understood that a design in which the first tooth part and the second tooth part are close to the sliding matching structure can ensure that structural forms of the first tooth part and the second gear are not easily deformed, and can also ensure accuracy of position positioning of the first tooth part and the second gear, thereby naturally improving reliability and the smoothness of meshing between the first tooth part and the second tooth part and the gears.

In a possible implementation, the first sliding matching structure includes a first guiding hole, the second sliding matching structure includes a second guiding hole, the first position-limiting structure includes a first guiding column, the second position-limiting structure includes a second guiding column, the first guiding hole matches the first guiding column, and the second guiding hole matches the second guiding column. In this solution, a specific sliding matching solution is limited, and through the matching of the guiding hole and the guiding column, assembly of the middle support plate and the main shaft is facilitated, and a function of sliding guide is also provided during the assembly, so that the foldable apparatus has advantages of a simple structure and a small volume.

In a possible implementation, the first sliding matching structure further includes two first sliding slots, the second sliding matching structure further includes two second sliding slots, in the length direction of the middle support plate, the two first sliding slots are distributed on two sides of the first guiding hole, and the two second sliding slots are distributed on two sides of the second guiding hole, the two first sliding slots and the two second sliding slots form openings in edge positions of the first part, the first position-limiting structure further includes two first position-limiting columns, the second position-limiting structure further includes two second position-limiting columns, in a length direction of the main shaft, the two first position-limiting columns are distributed on two sides of the first guiding column, and the two second position-limiting columns are distributed on two sides of the second guiding column, the two first position-limiting columns respectively match the two first sliding slots, and the two second position-limiting columns respectively match the two second sliding slots. In this solution, a specific sliding matching solution is provided, which can provide stable position limiting in a sliding direction, and ensure reliability of meshing between the first tooth part and the first gear and between the second tooth part and the second gear.

In a possible implementation, a first opening is disposed at the second part, in the thickness direction of the middle support plate, the middle support plate includes a bottom surface and a top surface that are disposed back to back, the first opening penetrates the bottom surface and the top surface, and the first opening is used to accommodate a part of the first hinge connecting rod in the unfolded state of the foldable apparatus. In this solution, the part of the first hinge connecting rod matches the first opening, and the part of the first hinge connecting rod and the middle support plate are interconnected in the unfolded state, so that stability of an overall structure of the foldable apparatus can be improved. In addition, a part of the first hinge connecting rod and the top surface are coplanar, so that the first hinge connecting rod and the middle support plate can jointly support the flexible display, and support force at the middle support plate can be improved.

In a possible implementation, a second opening is disposed at the second part, the second opening penetrates the bottom surface and the top surface, and in the unfolded state of the foldable apparatus, one end of a second rotating arm is located in the second opening, and a part of the second rotating arm and the top surface are coplanar. In this solution, the second rotating arm matches the second opening, the second hinge connecting rod and the middle support plate are interconnected in the unfolded state, so that the stability of an overall structure of the foldable apparatus can be improved. In addition, one end of the second rotating arm and the top surface are coplanar, so that the second rotating arm and the middle support plate can jointly support the flexible display, and support force at the middle support plate can be improved.

In a possible implementation, the main shaft includes a first outer side surface and a second outer side surface that are disposed opposite to each other, the first outer side surface faces the first support plate, the second outer side surface faces the second support plate, the main shaft further includes a first gear base and a second gear base, the first gear base is located between the accommodation part and the first outer side surface, the second gear base is located between the second outer side surface and the accommodation part, the first gear is rotatably connected to the first gear base, and the second gear is rotatably connected to the second gear base. In this solution, the first gear base is disposed between the first outer side surface and the accommodation part, the second gear base is disposed between the second outer side surface and the accommodation part, and the first gear base and the second gear base are distributed on left and right sides of the middle support plate, without occupying thickness space of the middle support plate. This can implement a thinning design of the foldable apparatus.

In a possible implementation, the first gear connecting rod includes a first gear shaft, the first gear is fastened to the first gear shaft, the first gear shaft is rotatably connected to the first gear base, one end of the first gear shaft has a first cam structure, the foldable apparatus further includes a first additional shaft and a first elastic component sleeved on the first additional shaft, the first additional shaft is located at one end in an axial direction of the first gear shaft, one end of the first additional shaft has a second cam structure, the first elastic component is elastically connected between the second cam structure and the main shaft, and the second cam structure matches the first cam structure, so that the first elastic component stores or releases elastic potential energy in a process in which the first gear rotates relative to the main shaft, where the elastic potential energy is used to drive the first gear to rotate. In this solution, the first cam structure of the first gear connecting rod matches the second cam structure at the one end of the first additional shaft, and the elastic potential energy is stored or released by using the first elastic component, so that the first support plate and the second support plate can be automatically opened and closed. In addition, positions of the first additional shaft and the first elastic component provided in this solution are located in the axial position of the first gear shaft of the first gear connecting rod, and do not occupy thickness space of the middle support plate either. This can implement a thinning design of the foldable apparatus.

In a possible implementation, the second gear connecting rod includes a second gear shaft, the second gear is fastened to the second gear shaft, the second gear shaft is rotatably connected to the second gear base, the foldable apparatus further includes a second additional shaft and a second elastic component sleeved on the second additional shaft, the second additional shaft is located at one end in an axial direction of the second gear shaft, one end of the second additional shaft matches one end of the second gear shaft by using cam structures, so that the second elastic component stores or releases elastic potential energy in a process in which the second gear rotates relative to the main shaft, and the elastic potential energy is used to drive the second gear to rotate. In this solution, the cam structures between the second gear connecting rod and the one end of the second additional shaft match, and the elastic potential energy is stored or released by using the second elastic component, so that the first support plate and the second support plate can be automatically opened and closed. In addition, positions of the second additional shaft and the second elastic component provided in this solution are located in the axial position of the second gear shaft of the second gear connecting rod, and do not occupy thickness space of the middle support plate either. This can implement a thinning design of the foldable apparatus.

In a possible implementation, the first support plate includes a first connecting rod sliding slot, the first connecting rod matches the first connecting rod sliding slot through sliding, and a sliding track of the first connecting rod in the first connecting rod sliding slot is linear or arc-shaped. In this solution, the relative sliding track between the first connecting rod and the first connecting rod sliding slot is limited to be linear or arc-shaped. Based on different sliding tracks, relative opening and closing speeds of the first support plate and the second support plate and positioning of a specific folding position can be adjusted.

In a possible implementation, the first connecting rod includes a first section and a second section, the first section matches the first connecting rod sliding slot through sliding, the second section is connected between the first gear and the first section, and an included angle is formed between the second section and the first section. In this solution, the first connecting rod is disposed to be the two sections, and the included angle is formed between the two sections. It can be understood as that the first section and the second section are not collinear, and a value of the included angle may be used to adjust a specific track and a speed in a rotation process of the first support plate.

In a possible implementation, in a width direction of the main shaft, the first support plate and the second support plate are distributed on the two sides of the main shaft, the length direction of the main shaft is perpendicular to the width direction of the main shaft, a first end wall and a second end wall are respectively formed at two ends of the main shaft in the length direction of the main shaft, the accommodation space is formed between the first end wall and the second end wall, the middle support plate is of an integrated structure, and an outline of the middle support plate matches a shape of the accommodation space. In this solution, the middle support plate is limited to be of the integrated structure, and the accommodation space is formed between the first end wall and the second end wall of the main shaft, that is, the accommodation space penetrates most of an axial area of the main shaft. It can be deduced that a length of the middle support plate is close to a length of the main shaft. The integrated structure makes a whole structure of the foldable apparatus more concise and compact, and facilitates a small-size design of the foldable apparatus.

According to a second aspect, an embodiment of this application provides an electronic device, including a first main body, a second main body, a flexible display, and the foldable apparatus according to any possible implementation of the first aspect, where the first main body is fastened to the first support plate, the second main body is fastened to the second support plate, the flexible display is fastened to the first main body and the second main body, and the first main body, the first support plate, the middle support plate, the second support plate, and the first and second main bodies jointly support the flexible display.

In a possible implementation, the electronic apparatus further includes a third main body, the third main body and the second main body are relatively foldable, and in a folded state of the electronic device, space between the first main body and the second main body is at least used to accommodate the third main body. In this solution, a tri-fold or quad-fold electronic device is provided. The third main body is accommodated in the space between the first main body and the second main body in the folded state, and through such a limitation, the foldable apparatus according to the first aspect is limited to be a large hinge structure in the electronic device, and correspondingly, a structure of a rotatable connection between the third main body and the second main body is a small hinge.

In a possible implementation, a partial region of the flexible display is fastened to the first support plate, a partial region of the flexible display is fastened to the second support plate, and the flexible display is not connected to the middle support plate.

In a possible implementation, the flexible display is not in contact with the middle support plate. In this solution, a specific disposing solution of the flexible display is limited. Because the flexible display is not in contact with the middle support plate, in this solution, that the flexible display in the position of the middle support plate is in a free state is limited, so that the flexible display can form a natural bending form in the folded state.

In a possible implementation, the electronic apparatus further includes a fourth main body, the fourth main body is rotatably connected to the first main body, and in the folded state of the electronic device, the space between the first main body and the second main body is used to accommodate the third main body and the fourth main body.

### BRIEF DESCRIPTION OF DRAWINGS

FIG. 1 is a diagram of a structure of an electronic device in an unfolded state according to a specific embodiment of this application;
FIG. 2 is a diagram of a structure of the electronic device shown in FIG. 1 in a one-fold state;
FIG. 3 is a diagram of a structure of the electronic device shown in FIG. 1 in a folded state;
FIG. 4 is a diagram of an electronic device in an unfolded state according to an implementation of this application;
FIG. 5 is a diagram of a first main body and a second main body in a folded state in the electronic device according to the implementation shown in FIG. 4;
FIG. 6 is a simplified diagram of a mechanism of a foldable apparatus according to an implementation of this application;
FIG. 7 is a simplified diagram of a mechanism of a foldable apparatus according to an implementation of this application;
FIG. 8 is a simplified diagram of a mechanism of a foldable apparatus according to an implementation of this application;
FIG. 9 is a diagram of a foldable apparatus in an unfolded state according to an implementation of this application;
FIG. 10 is a diagram of a foldable apparatus in a folded state according to an implementation of this application;
FIG. 11 is a schematic three-dimensional exploded view of a foldable apparatus in an unfolded state according to an implementation of this application;
FIG. 12 is a partially enlarged diagram of FIG. 11;
FIG. 13 is a side view of a foldable apparatus in an unfolded state according to an implementation of this application;
FIG. 14 is a side view of a foldable apparatus in a folded state according to an implementation of this application;
FIG. 15 is a three-dimensional diagram of a first support plate of a foldable apparatus according to an implementation of this application;
FIG. 16 is a partially enlarged diagram of the first support plate shown in FIG. 15;
FIG. 17 is a three-dimensional diagram of a middle support plate of a foldable apparatus according to an implementation of this application;
FIG. 18 is a partially enlarged diagram of the middle support plate shown in FIG. 17;
FIG. 19 is a partially enlarged diagram of the middle support plate shown in FIG. 17;
FIG. 20 is a three-dimensional diagram of a main shaft of a foldable apparatus according to an implementation of this application;
FIG. 21 is a partially enlarged diagram of the main shaft shown in FIG. 20;
FIG. 22 is a partially enlarged diagram of the main shaft shown in FIG. 20;
FIG. 23 is a diagram of a first gear connecting rod of a foldable apparatus according to an implementation of this application;
FIG. 24 is a simplified diagram of a mechanism of a first gear connecting rod of a foldable apparatus according to an implementation of this application;
FIG. 25 is a diagram of a connection relationship between a first gear connecting rod, a first additional shaft, and a related structure of a foldable apparatus according to an implementation of this application;
FIG. 26 is a diagram in which the first gear connecting rod, the first additional shaft, and the related structure shown in FIG. 25 are assembled to a main shaft;
FIG. 27 is a diagram of a first hinge connecting rod of a foldable apparatus according to an implementation of this application;
FIG. 28 is a diagram of a sectional position in a position of a first gear connecting rod of a foldable apparatus in an unfolded state according to an implementation of this application;
FIG. 29 is a diagram of the sectional position shown in FIG. 28 in a folded state;
FIG. 30 is a diagram of a sectional position in a position of a first hinge connecting rod of a foldable apparatus in an unfolded state according to an implementation of this application;
FIG. 31 is a diagram of the sectional position shown in FIG. 30 in a folded state; and
FIG. 32 is a diagram in which a foldable apparatus in a folded state is combined with a flexible display according to an implementation of this application.

### DESCRIPTION OF EMBODIMENTS

### Explanation of terms

Parallelism: Parallelism defined in this application is not limited to absolute parallelism. A definition of the parallelism herein can be understood as basic parallelism, and allow a case of non-absolute parallelism due to factors such as an assembly tolerance, a design tolerance, and a structural flatness. In this case, a sliding matching part and a first door panel are not absolutely parallel, but in this application it is also considered as parallel.

Verticality: Verticality defined in this application is not limited to an absolute vertical intersection (an included angle is 90 degrees) relationship, allows a non-absolute vertical intersection relationship due to factors such as an assembly tolerance, a design tolerance, and a structural flatness, and allows an error within a small angle range. For example, a relationship within an assembly error range of 80 degrees to 100 degrees can be understood as the vertical relationship.

Unfolded state: An electronic device with a foldable function includes two or three (or more) main bodies. The unfolded state can be understood as that an included angle between adjacent main bodies of the electronic device is close to 180 degrees, the adjacent main bodies are not limited to an absolute 180-degree included angle relationship, and it is allowed that, due to factors such as an assembly tolerance, a design tolerance, and a structural flatness, the included angle between the adjacent main bodies is not equal to 180 degrees, for example, an angle greater than 180 degrees, like 183 degrees, or an angle less than 180 degrees, like 178 degrees.

Folded state: An electronic device with a foldable function includes two or three (or more) main bodies. The folded state can be understood as a nearly parallel stacking relationship between adjacent main bodies of the electronic device, and is not limited to an absolute parallel relationship. Refer to the foregoing definition of parallelism.

The following describes embodiments of this application with reference to accompanying drawings in embodiments of this application.

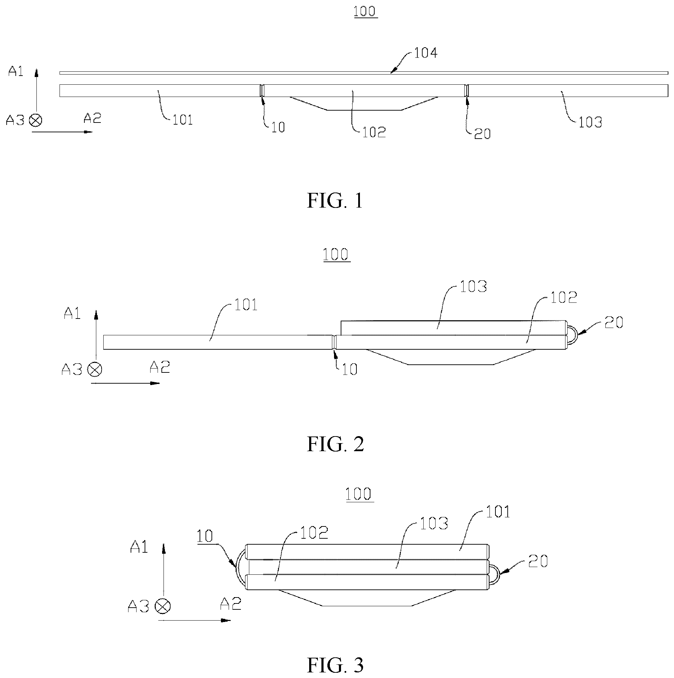

An electronic device provided in a specific implementation of this application may be a portable terminal with a foldable function, for example, a mobile phone. Refer to FIG. 1, FIG. 2, and FIG. 3. FIG. 1 is a diagram of a structure of an electronic device 100 in an unfolded state according to a specific embodiment of this application, FIG. 2 is a diagram of a structure of the electronic device 100 shown in FIG. 1 in a one-fold state, and FIG. 3 is a diagram of a structure the electronic device 100 shown in FIG. 1 in a folded state. In an implementation, the electronic device 100 is a tri-fold foldable display apparatus, the electronic device 100 includes a first main body 101, a second main body 102, and a third main body 103, and foldable apparatuses 10 and 20 are disposed between the first main body 101 and the second main body 102 and between the second main body 102 and the third main body 103 for connection. The foldable apparatuses 10 and 20 can be understood as apparatuses with a hinge structure, and the foldable apparatuses 10 and 20 can switch between an unfolded state and a folded state, that is, the foldable apparatuses 10 and 20 can be deformed. The electronic device 100 switches between the unfolded state, the one-fold state, and the folded state through deformation of the foldable apparatuses 10 and 20. The first main body 101, the second main body 102, the third main body 103, and the foldable apparatuses 10 and 20 that connect the first main body 101, the second main body 102, and the third main body 103 all correspond to different parts of a flexible display 104 of the electronic device. In this way, the electronic device 100 can obtain a larger display interface in the unfolded state, and the electronic device 100 can obtain a smaller size in the folded state, and has portability.

In another implementation, the electronic device provided in this application may alternatively be a quad-fold apparatus. The electronic apparatus further includes a fourth main body, the fourth main body is rotatably connected to the first main body, and in the folded state of the electronic device, space between the first main body and the second main body is used to accommodate the third main body and the fourth main body.

A thickness direction of the electronic device 100 is defined as a first direction A1, a length direction is defined as a second direction A2, and a width direction is defined as a third direction A3. Axial directions of the foldable apparatuses 10 and 20 are the width direction of the electronic device 100, that is, the third direction A3 (a direction perpendicular to a paper surface in FIG. 1, FIG. 2, and FIG. 3 is the third direction A3).

The flexible display 104 is configured to display an image, a video, and the like. For example, the flexible display 104 can be bent. The flexible display 104 may be an organic light-emitting diode (organic light-emitting diode, OLED) flexible display, an active-matrix organic light-emitting diode (active-matrix organic light-emitting diode, AMOLED) flexible display, a mini light-emitting diode (mini light-emitting diode) flexible display, a micro light-emitting diode (micro light-emitting diode) flexible display, a micro organic light-emitting diode (micro organic light-emitting diode) flexible display, a quantum dot light emitting diode (quantum dot light emitting diode, QLED) flexible display, or the like. The flexible display 104 may integrate a touch function. The electronic device 100 may wake up a corresponding part of the flexible display 104 in response to a gesture of touching the flexible display 104 by a user.

FIG. 1 schematically shows an exploded state of the three main bodies and the flexible display 104 of the electronic device 100. The flexible display 104 is of an integrated display structure. When the electronic device 100 is in the unfolded state, the first main body 101, the second main body 102, and the third main body 103 are sequentially arranged in the second direction A2 of the electronic device 100, and the flexible display 104 is in the unfolded state, to form a complete display interface of the electronic device 100. In the implementation shown in FIG. 1, the foldable apparatus 10 between the first main body 101 and the second main body 102 is in the unfolded state, and a part of the flexible display corresponding to the foldable apparatus 10 between the first main body 101 and the second main body 102 is a part of the complete display interface. The foldable apparatus 20 between the second main body 102 and the third main body 103 is also in the unfolded state, and a part of the flexible display corresponding to the foldable apparatus 20 between the second main body 102 and the third main body 103 is a part of the complete display interface. In an implementation, when the electronic device 100 is in the unfolded state, the electronic device 100 as a whole is plate-shaped, and the display interface is planar. In an implementation, when the electronic device 100 is in the unfolded state, the entire electronic device 100 may include an arc-shaped part, and the display interface may include an arc-shaped surface.

Refer to FIG. 2. To facilitate representation of the one-fold state of the electronic device 100, the flexible display is omitted in FIG. 2. When the electronic device 100 is in the one-fold state, the foldable apparatus 10 is in the unfolded state, the foldable apparatus 20 is in the folded state, the first main body 101 and the second main body 102 are in the unfolded state, and the second main body 102 and the third main body 103 are in the folded state in which the second main body 102 and the third main body 103 are stacked. A part of the flexible display is disposed between the second main body 102 and the third main body 103, and the flexible display in a position of the foldable apparatus 20 may be in a shape of a water drop. A part of the flexible display corresponding to the first main body 101 is exposed, and may be configured to display a video or an image.

Refer to FIG. 3. To facilitate representation of the folded state of the electronic device 100, the flexible display is omitted in FIG. 3. When the electronic device 100 is in the folded state, the foldable apparatuses 10 and 20 are both in the folded state, the first main body 101 is stacked on a side that is of the third main body 103 and that is away from the second main body 102, and the part of the flexible display corresponding to the first main body 101 is located between the third main body 103 and the first main body 101, and is invisible. In the folded state, a size of the electronic device 100 in the second direction A2 becomes smaller, and a size of the electronic device 100 in the first direction A1 becomes larger. An overall outline of the electronic device 100 is small, which facilitates portability.

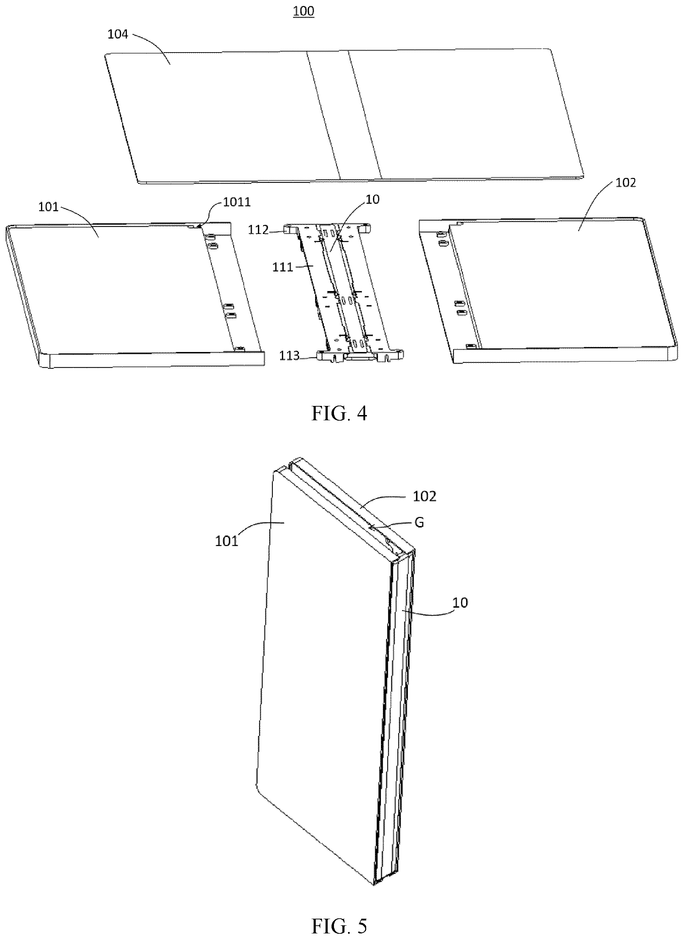

FIG. 4 is a diagram of an electronic device 100 in an unfolded state according to an implementation of this application, and FIG. 5 is a diagram of a first main body 101 and a second main body 102 in a folded state in the electronic device 100 according to the implementation shown in FIG. 4. In an implementation, the implementation shown in FIG. 4 may be a tri-fold electronic device, that is, the electronic device includes three main bodies and two foldable apparatuses, but only two main bodies and one foldable apparatus are shown. In another implementation, the electronic device 100 may alternatively be a bi-fold electronic device, that is, includes only two main bodies and one foldable apparatus.

Refer to FIG. 4 and FIG. 5. The electronic device 100 includes the first main body 101, the second main body 102, a flexible display 104, and a foldable apparatus 10. The foldable apparatus 10 is fastened to the first main body 101, and the foldable apparatus 10 is also fastened to the second main body 102. The flexible display 104 covers the first main body 101, the foldable apparatus 10, and the second main body 102. The foldable apparatus 10 has a folded state and an unfolded state. FIG. 4 shows the foldable apparatus 10 in the unfolded state, and the first main body 101 and the second main body 102 are distributed on two opposite sides (left and right sides shown in FIG. 4) of the foldable apparatus 10. FIG. 5 shows the foldable apparatus 10 in the folded state. As shown in FIG. 5, in the folded state, the first main body 101 and the second main body 102 are stacked and spaced, and are located on a same side of the foldable apparatus 10. Space G is formed between the first main body 101 and the second main body 102, and the space G may be used to accommodate a third main body, or may be in a vacant state.

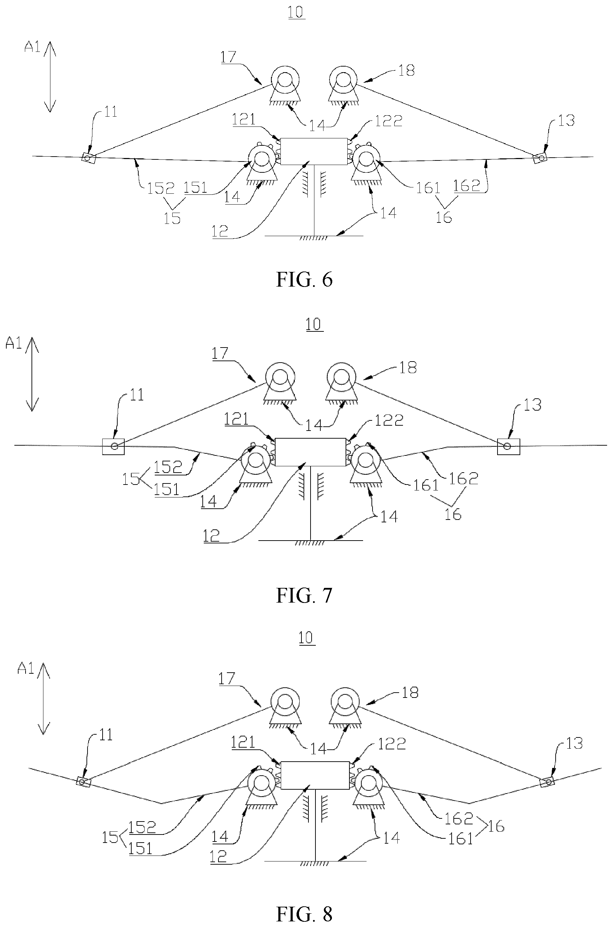

FIG. 6, FIG. 7, and FIG. 8 each are a simplified diagram of a mechanism of the foldable apparatus 10 according to this application. The foldable apparatus 10 includes a first support plate 11, a middle support plate 12, a second support plate 13, a main shaft 14, a first gear connecting rod 15, a second gear connecting rod 16, a first hinge connecting rod 17, and a second hinge connecting rod 18. The main shaft 14 may be a mounting base, and other structures are mounted on the main shaft 14. The first support plate 11 and the second support plate 13 are distributed on two sides of the main shaft 14. The first support plate 11 is rotatably connected to the main shaft 14 through the first hinge connecting rod 17, and the second support plate 13 is rotatably connected to the main shaft 14 through the second hinge connecting rod 18. The middle support plate 12 is slidably connected to the main shaft 14. Specifically, the middle support plate 12 can slide relative to the main shaft 14 in a first direction A1 (namely, a thickness direction of the foldable apparatus 10). The middle support plate 12 includes a first tooth part 121 and a second tooth part 122, and when the foldable apparatus 10 is in the unfolded state, the first tooth part 121 faces the first support plate 11, and the second tooth part 122 faces the second support plate 13. The first gear connecting rod 15 includes a first gear 151 and a first connecting rod 152 that are integrally interconnected, the first gear 151 is rotatably connected to the main shaft 14, the first gear 151 is meshed with the first tooth part 121, and the first connecting rod 152 is slidably connected to the first support plate 11. The second gear connecting rod 16 includes a second gear 161 and a second connecting rod 162 that are integrally interconnected, the second gear 161 is rotatably connected to the main shaft 14, the second gear 161 is meshed with the second tooth part 122, and the second connecting rod 162 is slidably connected to the second support plate 13. In a process in which the first support plate 11 and the second support plate 13 are relatively folded or unfolded, the middle support plate 12 slides relative to the main shaft 14 through meshing between the first gear 151 and the first tooth part 121 and meshing between the second gear 161 and the second tooth part 122. The meshing between the first gear 151 and the first tooth part 121 and the meshing between the second gear 161 and the second tooth part 122 can ensure synchronous opening and closing of the first support plate 11 and the second support plate 13. In other words, a process in which the first support plate 11 rotates relative to the main shaft 14 and a process in which second support plate 13 rotates relative to the main shaft 14 are synchronized.

Differences among implementations shown in FIG. 6, FIG. 7, and FIG. 8 lie in specific structures of the first connecting rod 152 and the second connecting rod 162. In the implementation shown in FIG. 6, both the first connecting rod 152 and the second connecting rod 162 of the foldable apparatus 10 are linear, in the implementation shown in FIG. 7, the first connecting rod 152 and the second connecting rod 162 of the foldable apparatus are bent, and in the implementation shown in FIG. 8, the first connecting rod 152 and the second connecting rod 162 of the foldable apparatus are also bent, but a bending direction is different from that in the implementation shown in FIG. 7. In the implementations shown in FIG. 7 and FIG. 8, specific angles of bending between the first connecting rod 152 and the second connecting rod 162 are not limited to states shown in the figures.

In this application, the first hinge connecting rod 17 and the second hinge connecting rod 18 are respectively connected between the first support plate 11 and the main shaft 14 and between the second support plate 13 and the main shaft 14, so that the first support plate 11 and the second support plate 13 are rotatably connected relative to the main shaft 14. In addition, the first gear connecting rod 15 and the second gear connecting rod 16 are connected between the middle support plate 12 and the first support plate 11 and between the middle support plate 12 and the second support plate 13, so that in a process of unfolding or folding of the foldable apparatus and a process in which the first support plate 11 and the second support plate 13 rotate relative to the main shaft 14, the first gear connecting rod 15 and the second gear connecting rod 16 can drive the middle support plate 12 to slide relative to the main shaft, and the first hinge connecting rod 17 and the second hinge connecting rod 18 are disposed with different axial centers and the first gear connecting rod 15 and the second gear connecting rod 16 are disposed with different axial centers, so that the first hinge connecting rod 17 and the second hinge connecting rod 18 can drive, in a folding process, the first gear connecting rod 15 and the second gear connecting rod 16 to slide in a direction away from the main shaft 14 relative to the first support plate 11 and the second support plate 13. This increases an overall length of the foldable apparatus, so that in the folded state, the middle support plate 12 can sink relative to the main shaft, and the first support plate 11 and the second support plate 13 slide in the direction away from the main shaft 14, thereby increasing space and providing accommodation space for the flexible display.

In addition, the structure of this application further facilitates a simplified structural design and a miniaturized size. Specifically, in this application, a meshing structure between the first tooth part 121 and the first gear connecting rod 15 and a meshing structure between the second tooth part 122 and the second gear connecting rod 16 not only have a function of driving the middle support plate 12 to move, but also can enable the first support plate 11 and the second support plate 13 to synchronously rotate, and a gear matching structure can also be a structure for providing damping force in the folding and unfolding processes of the foldable apparatus 10. Therefore, the meshing structure in this solution can implement a plurality of functions, and a synchronous rotation mechanism and a damping mechanism do not need to be additionally disposed in the foldable apparatus 10. This helps implement a simplified structure and a thin size of the foldable apparatus 10.

It can be learned that mechanism principles and connection relationships on the left and right sides are basically similar. Therefore, to simplify description, the following mainly uses a structural connection relationship on one side for description, and details on the other side are not described.

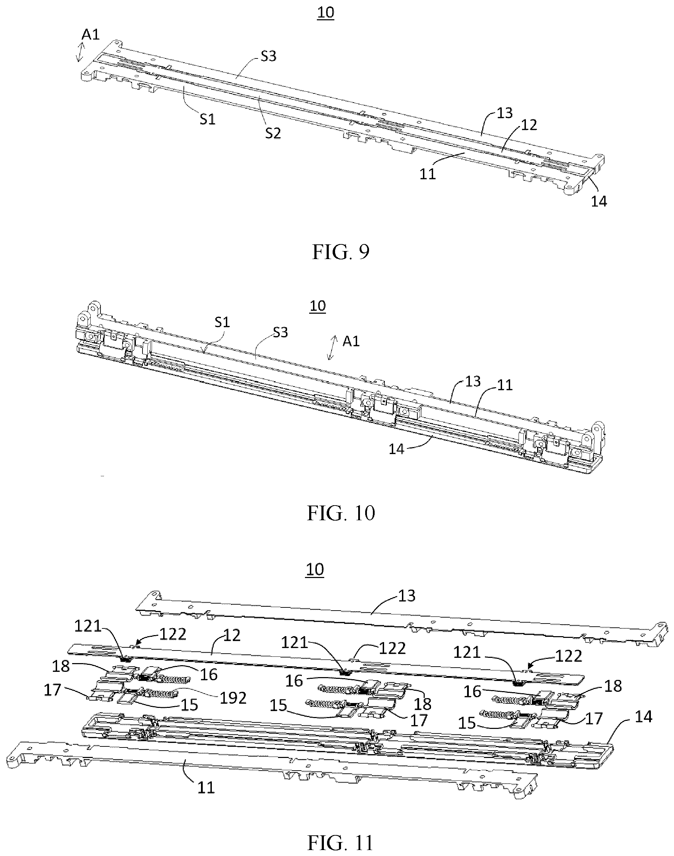

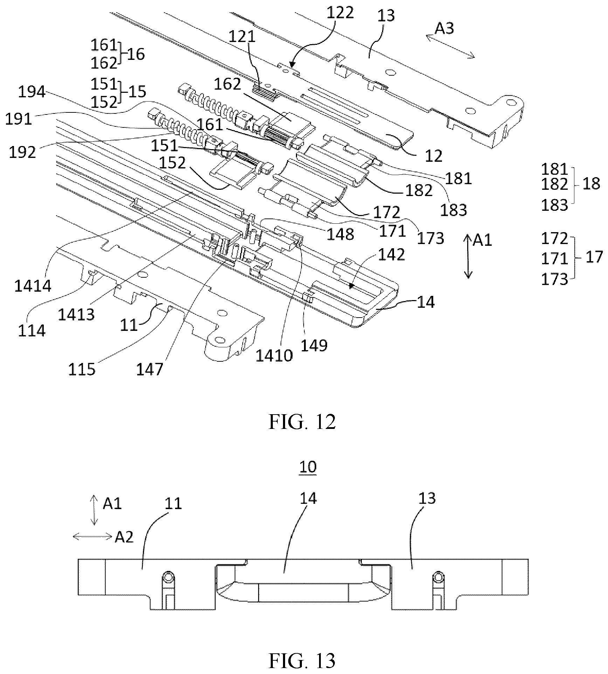

FIG. 9 is a diagram of the foldable apparatus in the unfolded state according to an implementation of this application, FIG. 10 is a diagram of the foldable apparatus in the folded state according to an implementation of this application, FIG. 11 is a schematic three-dimensional exploded view of the foldable apparatus in the unfolded state according to an implementation of this application, and FIG. 12 is a partially enlarged diagram of FIG. 11.

Refer to FIG. 9, FIG. 10, FIG. 11, and FIG. 12. The first support plate 11 and the second support plate 13 are distributed on two sides of the main shaft 14. Specifically, the first support plate 11 and the second support plate 13 may have a same structure, and may be symmetrically distributed on the two sides of the main shaft 14. The first support plate 11 includes a first support surface S1, the middle support plate 12 includes a second support surface S2, and the second support plate 13 includes a third support surface S3. In the unfolded state, as shown in FIG. 9, the second support surface S2 is connected between the first support surface S1 and the third support surface S3, and the three may be coplanar, so that the flexible display can present a flat display interface in the unfolded state.

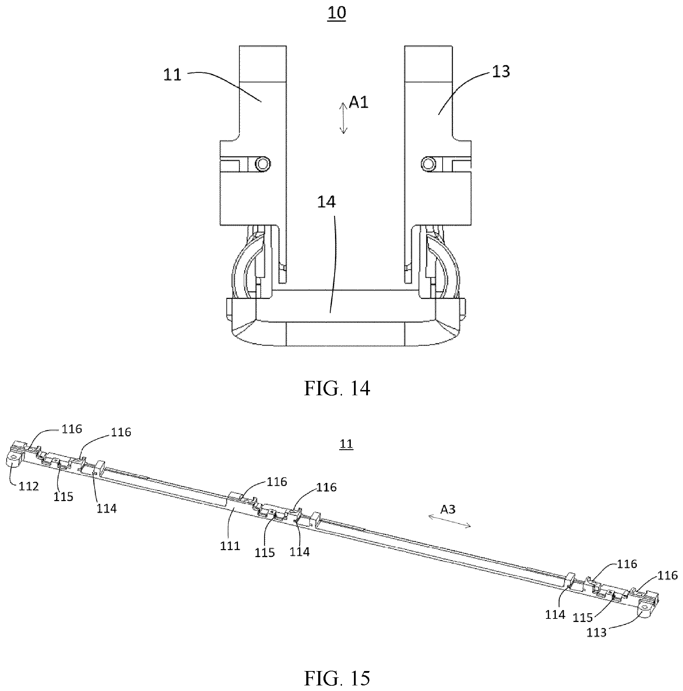

In an implementation, in the unfolded state, the second support surface S2 of the middle support plate 12 is aligned with a part of an outer surface of the main shaft 14. It can be understood as that the middle support plate 12 is located in accommodation space of the main shaft 14, and the second support surface S2 of the middle support plate 12 and the part of the outer surface of the main shaft 14 are coplanar. FIG. 13 is a side view of the foldable apparatus 10 in the unfolded state, and FIG. 14 is a side view of the foldable apparatus 10 in the folded state. Only the first support plate 11, the second support plate 13, and the main shaft 14 can be seen from the views shown in FIG. 13 and FIG. 14, and the middle support plate 12 cannot be seen because the middle support plate 12 is located inside the main shaft 14 and is shielded by the main shaft 14.

The first support plate 11 is rotatably connected to the main shaft 14, and the second support plate 13 is rotatably connected to the main shaft 14. In a process in which the foldable apparatus 10 switches from the unfolded state to the folded state, the first support plate 11 and the second support plate 13 synchronously rotate relative to the main shaft 14. Based on the unfolded state shown in FIG. 9, the first support plate 11 and the second support plate 13 synchronously rotate by a preset angle, so that the foldable apparatus 10 changes to the folded state, for example, the preset angle may be 90 degrees or close to 90 degrees (for example, the preset angle falls within a range of 75 degrees to 105 degrees). As shown in FIG. 10, in the folded state, the first support surface S1 of the first support plate 11 and the third support surface S3 of the second support plate 13 are disposed opposite to each other and spaced. In a specific implementation, the first support surface S1 and the third support surface S3 may be parallel to each other. In the folded state, the middle support plate 12 sinks to the inside of the main shaft 14, and the second support surface S2 of the middle support plate 12 is located inside the main shaft 14, so that movement of the middle support plate 12 provides avoidance space for the flexible display in a bent region, and the flexible display can be naturally bent without being squeezed and restricted by any structural characteristic. In addition, a part of the flexible display corresponding to the second support surface S2 can be accommodated inside the main shaft 14, and a bent part of the flexible display is U-shaped, and a gap between the bent part and the middle support plate 12 may also be located inside the main shaft 14 and shielded by the main shaft 14, so that the foldable apparatus 10 has no obvious gap in the folded state.

Refer to FIG. 11 and FIG. 12. In an implementation, the middle support plate 12 is connected to the first support plate 11 through the first gear connecting rod 15, and the middle support plate 12 is connected to the second support plate 13 through the second gear connecting rod 16. The first tooth part 121 and the second tooth part 122 on the middle support plate 12 are both rack-shaped. The first gear 151 of the first gear connecting rod 15 is rotatably connected to the main shaft 14 and is meshed with the first tooth part 121 of the middle support plate 12. The second gear 161 of the second gear connecting rod 16 is rotatably connected to the main shaft 14 and is meshed with the second tooth part 122 of the middle support plate 12. Relative opening and closing the first support plate 11 and the second support plate 13 can drive the middle support plate 12 to slide relative to the main shaft 14. Specifically, the middle support plate 12 can slide back and forth relative to the main shaft 14 in the first direction A1 (namely, the thickness direction of the foldable apparatus). The first support plate 11 is rotatably connected to the main shaft 14 through the first hinge connecting rod 17, and the second support plate 13 is rotatably connected to the main shaft through the second hinge connecting rod 18. Specific rotatable connection solutions between the first support plate 11 and the main shaft 14 and between the second support plate 13 and the main shaft 14 are not limited in this application, may be a rotatable connection solution of a virtual hinge, for example, an arc-shaped arm, or may be a rotatable connection solution in which a physical hinge structure matches a sliding structure.

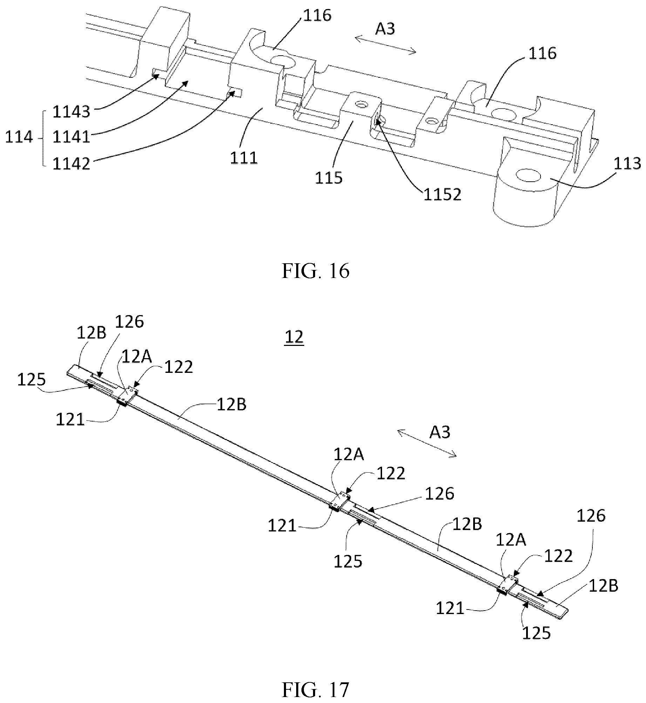

FIG. 15 is a three-dimensional diagram of the first support plate of the foldable apparatus according to an implementation of this application, and FIG. 16 is a partially enlarged diagram of the first support plate shown in FIG. 15. Refer to FIG. 15 and FIG. 16. The first support plate 11 as a whole is in a long strip shape, and an extension direction of the first support plate 11 is a third direction A3 (namely, a width direction of the foldable apparatus). The first support plate 11 includes a first support main body 111, a first position-limiting end 112, and a second position-limiting end 113. The first position-limiting end 112 and the second position-limiting end 113 are distributed in positions of two opposite edges of the first support main body 111 in the third direction A3. As shown in FIG. 4, the first position-limiting end 112 and the second position-limiting end 113 are located on a side that is of the first support main body 111 and that is away from the main shaft 14, and two position-limiting slots 1011 are disposed on the first main body 101 (FIG. 4 shows only one position-limiting slot 1011). The two position-limiting slots 1011 are respectively configured to accommodate the first position-limiting end 112 and the second position-limiting end 113, and position limiting and fastening between the first support plate 11 and the first main body 101 are implemented through matching of the first position-limiting end 112 and the second position-limiting end 113 and the position-limiting slot 1011. Specifically, fastening holes may be disposed on the first position-limiting end 112 and the second position-limiting end 113, and the first position-limiting end 112 and the second position-limiting end 113 may be fastened to the first main body 101 by using fasteners such as screws.

One surface of the first support main body 111 is the first support surface S1, and the first support main body 111 is further configured to be slidably connected to the first connecting rod 152 of the first gear connecting rod 15 and rotatably connected to the first hinge connecting rod 17. Specifically, refer to FIG. 15 and FIG. 16. A first connecting rod sliding slot 114 is disposed on the first support main body 111, the first connecting rod 152 of the first gear connecting rod 15 matches the first connecting rod sliding slot 114 through sliding, and a sliding track of the first connecting rod 152 in the first connecting rod sliding slot 114 may be linear or arc-shaped. In an implementation, refer to FIG. 13 and FIG. 14. A sliding track limited by the first connecting rod sliding slot 114 may be a second direction A2 in the unfolded state or the first direction A1 in the folded state. The first connecting rod sliding slot 114 includes a first accommodation region 1141, a first sliding rail 1142, and a second sliding rail 1143. The first accommodation region 1141 is used to accommodate a main body part of the first connecting rod 152, and the first sliding rail 1142 and the second sliding rail 1143 are configured to accommodate two sliding parts of the first connecting rod 152. The two sliding parts protrude on two sides of the main body part of the first connecting rod 152. A rotatable connection part 115 is further disposed on the first support main body 111, and the rotatable connection part 115 is rotatably connected to the first hinge connecting rod 17. Specifically, a first shaft hole 1152 is disposed at the rotatable connection part 115, and the first hinge connecting rod 17 matches a first shaft and the first shaft hole 1152, to implement a rotatable connection between the rotatable connection part 115 and the first hinge connecting rod 17. An axial direction of the first shaft hole 1152 is the third direction A3.

The first connecting rod sliding slot 114 and the rotatable connection part 115 are disposed adjacently and distributed on the first support main body 111 in the third direction A3. In a specific implementation, three first connecting rod sliding slots 114 and three rotatable connection parts 115 are disposed on the first support main body 111. A first one of the three rotatable connection parts 115 is adjacent to the first position-limiting end 112, a second one of the three rotatable connection parts 115 is adjacent to the second position-limiting end 113, and a third one of the three rotatable connection parts 115 is located in a middle position of the first support main body 111 in the third direction A3. A definition of the middle position can be understood as that there is a specific distance from the middle position to both the first position-limiting end 112 and the second position-limiting end 113. However, the distance between the middle position and the first position-limiting end 112 and the distance between the middle position and the second position-limiting end 113 may be equal, or there may be a distance difference. The distance difference may be a small size range affected by factors such as a design tolerance and a structural design avoidance. The three first connecting rod sliding slots 114 are respectively disposed adjacent to the three rotatable connection parts 115. In another implementation, there may alternatively be two, four, or more first connecting rod sliding slots 114 and rotatable connection parts 115. A specific quantity may be determined based on a size of the electronic device in the third direction A3. For example, for an electronic device with a small size in the third direction A3, only two first connecting rod sliding slots 114 and rotatable connection parts 115 may be disposed in the foldable apparatus. For an electronic device with a large size, a large quantity of first connecting rod sliding slots and a large quantity of rotatable connection parts need to be disposed, to ensure smoothness of opening and closing.

A plurality of fastening parts 116 are further disposed on the first support main body 111. Refer to FIG. 15. In a specific implementation, a quantity of fastening parts 116 is twice a quantity of rotatable connection parts 115, and one fastening part 116 is disposed on two sides of each rotatable connection part 115. The fastening part 116 is configured to be fastened to the first main body of the electronic device. As shown in FIG. 16, one fastening part 116 is disposed on each of two sides of each rotatable connection part 115 in the third direction A3. The design scheme helps ensure stability and reliability of the rotatable connection between the rotatable connection part 115 and the first hinge connecting rod 17.

A structure of the second support plate 13 is similar to that of the first support plate 11, and details are not described.

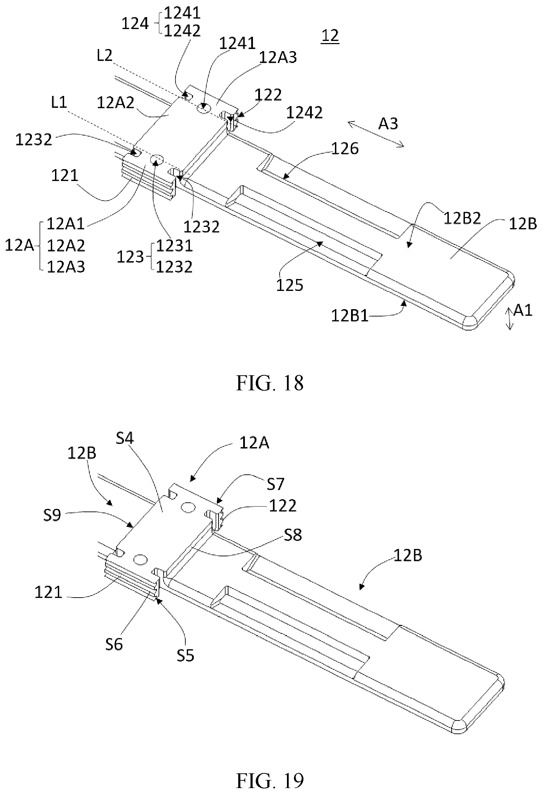

FIG. 17 is a three-dimensional diagram of the middle support plate 12 of the foldable apparatus according to an implementation of this application, and FIG. 18 and FIG. 19 each are a partially enlarged diagram of the middle support plate 12 shown in FIG. 17. A difference between FIG. 18 and FIG. 19 lies in reference numerals for different structural characteristics. Refer to FIG. 17, FIG. 18, and FIG. 19. The middle support plate 12 as a whole is in the long strip shape, and a length direction of the middle support plate 12 is the third direction A3. In a specific implementation, the middle support plate 12 includes a first part 12A and a second part 12B, and a thickness of the first part 12A is greater than a thickness of the second part 12B. The thickness of the first part 12A is a size of the first part 12A in the first direction A1, and the thickness of the second part 12B is a size of the second part 12B in the first direction A1. Both the length direction and a width direction of the middle support plate 12 are perpendicular to the first direction A1. The first part 12A and the second part 12B are disposed adjacently in the length direction (namely, the third direction A3) of the middle support plate 12, the first tooth part 121 and the second tooth part 122 are disposed at the first part 12A, the first tooth part 121 and the second tooth part 122 are disposed back to back in the width direction of the middle support plate 12, and the width direction of the middle support plate 12 is the second direction A2. Specifically, as shown in FIG. 19, the first part 12A includes a top surface S4, a bottom surface S5, and four side surfaces connected between the top surface S4 and the bottom surface S5. The four side surfaces include a first side surface S6 and a third side surface S7 that are disposed opposite to each other and a second side surface S8 and a fourth side surface S9 that are disposed opposite to each other. The first tooth part 121 is disposed on the first side surface S6, and the second tooth part 122 is disposed on the third side surface S7. The second side surface S8 and the fourth side surface S9 are integrated with the second part 12B. The top surface S4 of the first part 12A may be a part of the second support surface S2 (with reference to FIG. 9). In a specific implementation, as shown in FIG. 17, there are three first parts 12A, and the three first parts 12A are spaced in the length direction (namely, the third direction A3) of the middle support plate 12. There are four second parts 12B, and similarly, the four second parts 12B are spaced in the length direction (namely, the third direction A3) of the middle support plate 12, and two adjacent second parts 12B are connected to one first part 12A.

Refer to FIG. 18. In the width direction of the middle support plate 12, the first part 12A includes a first matching part 12A1, a main body 12A2, and a second matching part 12A3 that are sequentially connected. As shown in FIG. 18, two dashed lines L1 and L2 divide the first part 12Ainto three sub-regions. The three sub-regions are respectively the first matching part 12A1, the main body 12A2, and the second matching part 12A3. In an implementation, the two dashed lines L1 and L2 are parallel to each other, and extension directions are both the third direction A3. The first tooth part 121 is located on a surface that is of the first matching part 12A1 and that is away from the main body 12A2, and the second tooth part 122 is located on a surface that is of the second matching part 12A3 and that is away from the main body 12A2. In an implementation, that the main body 12A2 and the second part 12B are connected and have an equal width can be understood as that two dashed lines L1 and L2 coincide with edges of the second part 12B.

The first part 12A includes a first sliding matching structure 123 and a second sliding matching structure 124, the first sliding matching structure 123 is located in a position in which the first matching part 12A1 is adjacent to the main body 12A2 or is located in the first matching part 12A1, the second sliding matching structure 124 is located in a position in which the second matching part 12A3 is adjacent to the main body 12A2 or is located in the second matching part 12A3, the first sliding matching structure 123 is configured to match a corresponding position-limiting structure on the main shaft 14, and the second sliding matching structure 124 is configured to match a corresponding position-limiting structure on the main shaft 14, to guide relative sliding between the middle support plate 12 and the main shaft 14.

The first sliding matching structure 123 includes a first guiding hole 1231, and the second sliding matching structure 124 includes a second guiding hole 1241. The first sliding matching structure 123 further includes two first sliding slots 1232, the second sliding matching structure 124 further includes two second sliding slots 1242, in the length direction of the middle support plate 12, the two first sliding slots 1232 are distributed on two sides of the first guiding hole 1231, the two second sliding slots 1242 are distributed on two sides of the second guiding hole 1241, and the two first sliding slots 1232 and the two second sliding slots 1242 form openings in edge positions of the first part 12A.

A first opening 125 and a second opening 126 are disposed at the second part 12B, in a thickness direction of the middle support plate 12, the second part 12B includes a bottom surface 12B1 and a top surface 12B2 that are disposed back to back, and the first opening 125 and the second opening 126 penetrate the bottom surface 12B1 and the top surface 12B2. In the width direction of the middle support plate 12, the first opening 125 and the second opening 126 are spaced, the first opening 125 is adjacent to an edge that is of the second part 12B and that faces the first support plate 11, and the second opening 126 is adjacent to an edge that is of the second part 12B and that faces the second support plate 13. The first opening 125 is used to accommodate a part of the first hinge connecting rod 17, and the second opening 126 is used to accommodate a part of second hinge connecting rod 18.

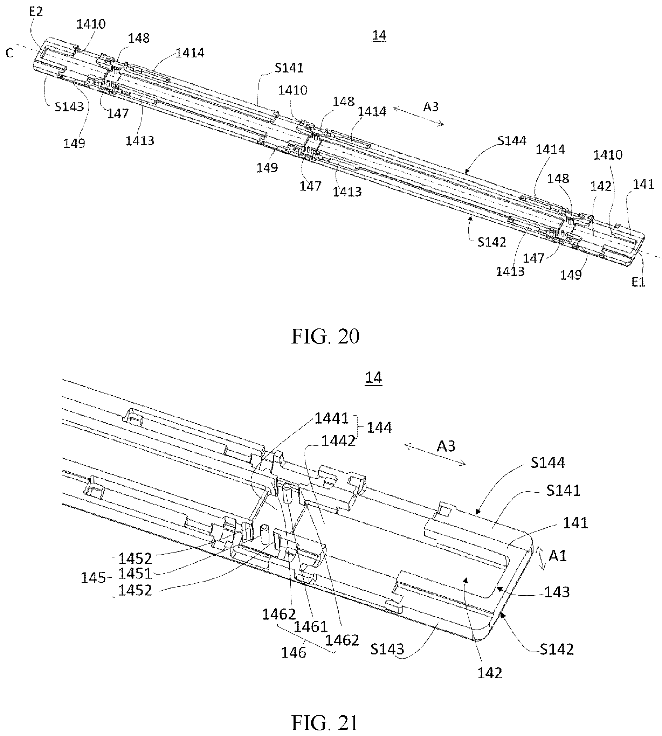

FIG. 20 is a three-dimensional diagram of the main shaft 14 of the foldable apparatus according to an implementation of this application, and FIG. 21 is a partially enlarged diagram of the main shaft 14 shown in FIG. 20. Refer to FIG. 20 and FIG. 21. The main shaft 14 as a whole is in the long strip shape, the main shaft 14 is a central mounting base of the foldable apparatus, and the middle support plate 12, the first gear connecting rod 15, the second gear connecting rod 16, the first hinge connecting rod 17, and the second hinge connecting rod 18 are all mounted on the main shaft 14, and can form a modular structure assembled as a whole. The main shaft 14 includes a main shaft top surface S141 and a main shaft bottom surface S142 that are disposed opposite to each other, and a first outer side surface S143 and a second outer side surface S144 that are connected between the main shaft top surface S141 and the main shaft bottom surface S142. The main shaft top surface S141 faces the flexible display, the main shaft bottom surface S142 is away from the flexible display, the first outer side surface S143 faces the first support plate 11, and the second outer side surface S144 faces the second support plate 13. Refer to FIG. 20. The main shaft 14 includes an accommodation part 141, accommodation space 142 is disposed in the accommodation part 141, and the accommodation space 142 is used to accommodate the middle support plate 12. In a length direction of the main shaft 14, the accommodation part 141 extends from a first end E1 to a second end E2 of the main shaft 14. The first end E1 and the second end E2 are two end parts of the main shaft 14 in the length direction. In a width direction of the main shaft 14, the accommodation part 141 is located in a middle region of the main shaft 14, that is, the accommodation part 141 and the first outer side surface S143 are spaced, and the accommodation part 141 and the second outer side surface S144 are also spaced. "Spaced" herein can be understood as a non-adjacent relationship between two characteristics, there is another feature between the two characteristics, and the two characteristics are separated by the another feature.

The accommodation part 141 includes an open end 143 and a bottom wall 144. The open end 143 and the bottom wall 144 are disposed opposite to each other in the first direction A1 (namely, a thickness direction of the main shaft 14), and the first direction A1 is the thickness direction of the foldable apparatus in the unfolded state. The open end 143 is formed on the main shaft top surface S141 of the main shaft 14, and it can be understood as that the accommodation space 142 of the accommodation part 141 is of a groove structure disposed on the main shaft top surface S141. In an implementation, as shown in FIG. 21, the bottom wall 144 of the accommodation part 141 includes a first bottom part 1441 and a second bottom part 1442, a thickness of the first bottom part 1441 is less than a thickness of the second bottom part 1442, and a step structure is formed at a connection part of the first bottom part 1441 and the second bottom part 1442.

In an implementation, an inner surface (namely, a surface that is of the first bottom part 1441 and that faces the accommodation space 142) of the first bottom part 1441 is planar, and an inner surface (namely, a surface that is of the second bottom part 1442 and that faces the accommodation space 142) of the second bottom part 1442 is planar. In another implementation, an inner surface of the first bottom part 1441 and an inner surface of the second bottom part 1442 may be of curved surface structures, for example, concave curved surfaces. In an implementation, an outer surface (namely, a surface that is of the first bottom part 1441 and that is away from the accommodation space 142) of the first bottom part 1441 may be of a planar structure or a convex curved structure. The outer surface of the first bottom part 1441 and an outer surface of the second bottom part 1442 are coplanar, that is, there is no step transition at a connection part of the outer surface of the first bottom part 1441 and the outer surface of the second bottom part 1442, but the outer surface of the first bottom part 1441 and the outer surface of the second bottom part 1442 are interconnected to form a complete plane or curved surface. The outer surface of the first bottom part 1441 and the outer surface of the second bottom part 1442 that are provided in this solution may be used as an outer surface of the electronic device, that is, the outer surface of the first bottom part 1441 and the outer surface of the second bottom part 1442 are not shielded by another structure. This helps improve customer experience while implementing thinning of the electronic device.

In an implementation, as shown in FIG. 21, the main shaft 14 includes a first position-limiting structure 145 and a second position-limiting structure 146, and the first position-limiting structure 145 includes a first guiding column 1451 and two first position-limiting columns 1452. The second position-limiting structure 146 includes a second guiding column 1461 and two second position-limiting columns 1462. In a length direction (namely, the third direction A3) of the main shaft 14, the two first position-limiting columns 1452 are distributed on two sides of the first guiding column 1451, and the two second position-limiting columns 1462 are distributed on two sides of the second guiding column 1461. In a specific implementation, both the first guiding column 1451 and the second guiding column 1461 are of cylindrical structures, and end surfaces of bottoms of the first guiding column 1451 and the second guiding column 1461 are connected to the bottom wall 144 of the accommodation part 141. Outer side surfaces of the first guiding column 1451 and the second guiding column 1461 are independently located in the accommodation space 142, and are not connected to other structures. Orientations of end surfaces of tops of the first guiding column 1451 and the second guiding column 1461 are the same as an orientation of the main shaft top surface S141, and the end surfaces of the tops of the first guiding column 1451 and the second guiding column 1461 may be configured to support the flexible display. In a specific implementation, a part of side surfaces of the two first position-limiting columns 1452 and the two second position-limiting columns 1462 and a side wall of the accommodation part 141 are integrally interconnected. End surfaces of bottoms of the two first position-limiting columns 1452 and the two second position-limiting columns 1462 are connected to the bottom wall 144 of the accommodation part 141. Orientations of end surfaces of tops of the two first position-limiting columns 1452 and the two second position-limiting columns 1462 are the same as the orientation of the main shaft top surface S141, and the end surfaces of the tops of the two first position-limiting columns 1452 and the two second position-limiting columns 1462 may also be configured to support the flexible display.

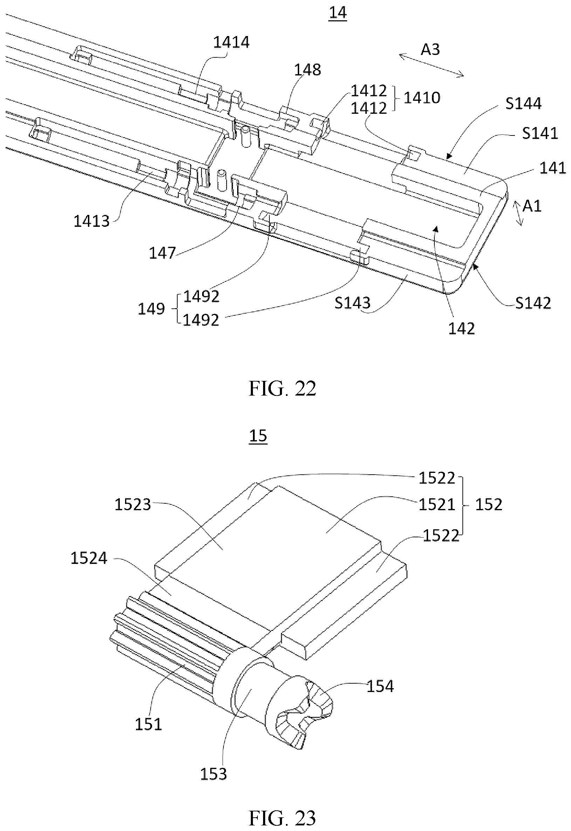

In an implementation, as shown in FIG. 22, the main shaft 14 further includes a first gear base 147 and a second gear base 148, the first gear base 147 is located between the accommodation part 141 and the first outer side surface S143, and the second gear base 148 is located between the second outer side surface S144 and the accommodation part 141. The first gear base 147 is configured to assemble the first gear 151, and the second gear base 148 is configured to assemble the second gear 161. The first position-limiting structure 145 is located in an intersection position of the first gear base 147 and the accommodation part 141, and the second position-limiting structure 146 is located in an intersection position of the second gear base 148 and the accommodation part 141. It can be understood as that, in an implementation, the first position-limiting structure 145 and the second position-limiting structure 146 are respectively disposed adjacent to the first gear 151 and the second gear 161. This solution can improve stability of the meshing between the first gear 151 and the first tooth part 121, and improve stability of the meshing between the second gear 161 and the second tooth part 122. The first gear 151 is rotatably connected to the first gear base 147, and the second gear 161 is rotatably connected to the second gear base 148.

In a specific implementation, the first gear base 147 and the second gear base 148 are groove structures disposed on the main shaft top surface S141, that is, the first gear base 147 and the second gear base 148 form a region between the main shaft top surface S141 and the main shaft bottom surface S142. This design facilitates thinning of the foldable apparatus. Since the accommodation space 142, the first gear base 147, and the second gear base 148 are all concave structures disposed on the main shaft top surface S141, the middle support plate 12, the first gear 151, and the second gear 161 are all assembled in the region between the main shaft top surface S141 and main shaft bottom surface S142, and a thickness of the main shaft 14 is a thickness of the foldable apparatus in the unfolded state. Therefore, the foldable apparatus with a thinning design can be obtained in this application.

In a specific implementation, as shown in FIG. 22, the main shaft 14 further includes a first adapter part 149 and a second adapter part 1410. The first adapter part 149 is located between the first outer side surface S143 and the accommodation part 141, and the second adapter part 1410 is located between the second outer side surface S144 and the accommodation part 141. The first adapter part 149 is located on a side of the first gear base 147 in the length direction of the main shaft 14, and the second adapter part 1410 is located on a side of the second gear base 148 in the length direction of the main shaft 14. In a specific implementation, the first adapter part 149 includes a pair of first arc-shaped sliding slots 1492, openings of the pair of first arc-shaped sliding slots 1492 are disposed opposite to each other, and a region between the openings of the pair of first arc-shaped sliding slots 1492 is used to accommodate a part of the first hinge connecting rod 17. The pair of first arc-shaped sliding slots 1492 is configured to: match the first hinge connecting rod 17 and limit a sliding track of the first hinge connecting rod 17 during opening and closing of the foldable apparatus. The second adapter part 1410 includes a pair of second arc-shaped sliding slots 1412, openings of the pair of second arc-shaped sliding slots 1412 are disposed opposite to each other, and a region between the openings of the pair of second arc-shaped sliding slots 1412 is used to accommodate a part of the second hinge connecting rod 18. The pair of second arc-shaped sliding slots 1412 is configured to: match the second hinge connecting rod 18 and limit a sliding track of the second hinge connecting rod 18 during the opening and closing of the foldable apparatus. Inner space of the pair of first arc-shaped sliding slots 1492 communicates with the accommodation space 142 of the accommodation part 141, so that the part of the first hinge connecting rod 17 can enter the accommodation space 142 when the foldable apparatus is in the unfolded state. Similarly, inner space of the pair of second arc-shaped sliding slots 1412 communicates with the accommodation space 142 of the accommodation part 141, so that the part of the second hinge connecting rod 18 can enter the accommodation space 142 when the foldable apparatus is in the unfolded state. In this implementation, the first adapter part 149 and the second adapter part 1410 are disposed to be of arc-shaped sliding slot structures, so that the first adapter part 149 and the second adapter part 1410 form the region between the main shaft top surface S141 and main shaft bottom surface S142. This facilitates the thinning design of the foldable apparatus.

In a specific implementation, as shown in FIG. 22, a first shaft slot 1413 and a second shaft slot 1414 are further disposed on the main shaft 14. The first shaft slot 1413 is located between the first outer side surface S143 and the accommodation part 141, and the second shaft slot 1414 is located between the second outer side surface S144 and the accommodation part 141. In the length direction of the main shaft 14, the first shaft slot 1413 is located on a side that is of the first gear base 147 and that is away from the first adapter part 149, and the second shaft slot 1414 is located on a side that is of the second gear base 148 and that is away from the second adapter part 1410. Inner space of the first shaft slot 1413 communicates with inner space of the first gear base 147, and inner space of the second shaft slot 1414 communicates with inner space of the second gear base 148.

In a specific implementation, refer to FIG. 20. The main shaft 14 includes a central axis C extending in the third direction A3, and the main shaft 14 is a symmetrical structure centered on the central axis C. Specifically, the first gear base 147 and the second gear base 148 are symmetrically distributed on two sides of the central axis C, the first adapter part 149 and the second adapter part 1410 are symmetrically distributed on the two sides of the central axis C, and the first shaft slot 1413 and the second shaft slot 1414 are symmetrically distributed on the two sides of the central axis C.

In a specific implementation, refer to FIG. 20. In the third direction A3, three first gear bases 147 and three second gear bases 148 are disposed on the main shaft 14, and are spaced. A first one of the first gear bases 147 and a first one of the second gear bases 148 are disposed close to the first end E1 of the main shaft 14, a second one of the first gear bases 147 and a second one of the second gear bases 148 are disposed close to the second end E2 of the main shaft 14, and a third one of the first gear bases 147 and a third one of the second gear bases 148 are located in a middle region between the first end E1 and the second end E2. Correspondingly, there are three first adapter parts 149 and three second adapter parts 1410, and three first shaft slots 1413 and three second shaft slots 1414.

FIG. 23 is a diagram of the first gear connecting rod 15 of the foldable apparatus according to an implementation of this application. Refer to FIG. 23. The first gear connecting rod 15 includes the first gear 151, a first gear shaft 153, and the first connecting rod 152 that are integrally interconnected. The first gear 151 is fastened to a periphery of the first gear shaft 153. One end of the first connecting rod 152 is fastened to the first gear 151, and the first connecting rod 152 is configured to match the first connecting rod sliding slot 114 on the first support plate 11. The first connecting rod 152 includes a main body part 1521 and a pair of sliding parts 1522. The pair of sliding parts 1522 is respectively located on two opposite sides of the main body part 1521 in an extension direction of the first gear shaft 153, and the extension direction of the first gear shaft 153 is consistent with the third direction A3 (the length direction of the main shaft 14).

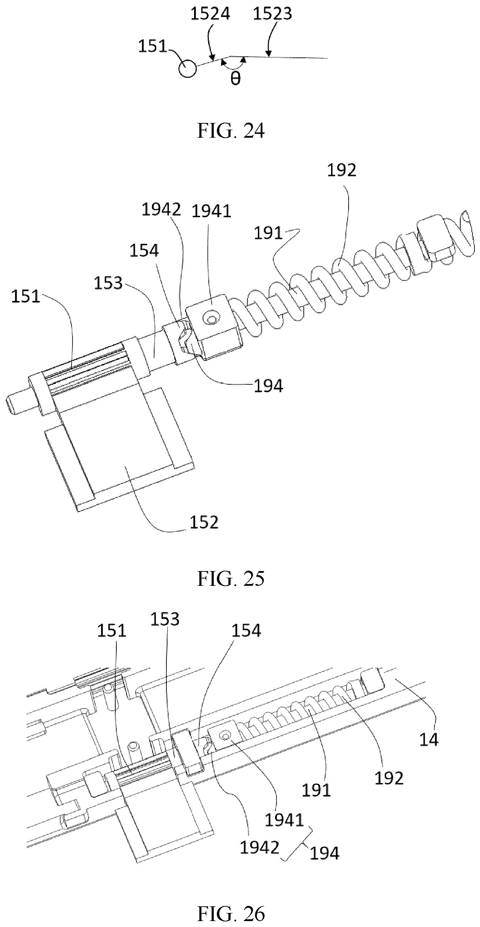

Refer to FIG. 23 and FIG. 24. In an implementation, the main body part 1521 of the first connecting rod 152 includes a first section 1523 and a second section 1524, and the second section 1524 is connected between the first gear 151 and the first section 1523. The pair of sliding parts 1522 is located on two sides of the first section 1523, that is, the first section 1523 is configured to match the first connecting rod sliding slot 114 through sliding, and an included angle θ is formed between the second section 1524 and the first section 1523.

Refer to FIG. 23. In an implementation, the first gear connecting rod 15 further includes a first cam structure 154, and the first cam structure 154 is located at one end of the first gear shaft 153.

Refer to FIG. 25 and FIG. 26. FIG. 25 is a diagram of a connection relationship between the first gear connecting rod 15, a first additional shaft 181, and a related structure of the foldable apparatus according to an implementation of this application, and FIG. 26 is a diagram in which the first gear connecting rod 15, the first additional shaft 191, and the related structure shown in FIG. 25 are assembled to the main shaft 14. In an implementation, the foldable apparatus further includes the first additional shaft 191 and a first elastic component 192 sleeved on the first additional shaft 191. The first elastic component 192 may be a spring. The first additional shaft 191 is located at one end in an axial direction of the first gear shaft 153, one end of the first additional shaft 191 has a second cam structure 194, the first elastic component 192 is elastically connected between the second cam structure 194 and the main shaft 14, and the second cam structure 194 matches the first cam structure 154, so that the first elastic component 192 stores or releases elastic potential energy in a process in which the first gear 151 rotates relative to the main shaft 14, and the elastic potential energy is used to drive the first gear 151 to rotate.

Specifically, the second cam structure 194 includes a cam base 1941 and a matching end 1942. The cam base 1941 is fastened to the one end of the first additional shaft 191, the matching end 1942 and the cam base 1941 are of an integrated structure, and the matching end 1942 is located at an end that is of the cam base 1941 and that is away from the first additional shaft 191.

A second additional shaft, a second elastic component, and a corresponding cam structure are also disposed on one side of the second gear connecting rod 16, and a specific structure design is similar to that of the first additional shaft 191, the first elastic component 192, and the first cam structure 154 on one side of the first gear connecting rod 15. A specific structure of the second gear connecting rod 16 is the same as a specific structure of the first gear connecting rod 15, and a structural relationship between the second additional shaft, the second elastic component, and the second gear is the same as a structural relationship between the first additional shaft, the first elastic component, and the first gear. Details are not described.

In summary, the second gear connecting rod 16 includes a second gear shaft, the second gear 161 is fastened to the second gear shaft, the second gear shaft is rotatably connected to the second gear base 148, the foldable apparatus further includes the second additional shaft and the second elastic component sleeved on the second additional shaft, the second additional shaft is located at one end in an axial direction of the second gear shaft, one end of the second additional shaft matches one end of the second gear shaft by using cam structures, so that the second elastic component stores or releases elastic potential energy in a process in which the second gear rotates relative to the main shaft, and the elastic potential energy is used to drive the second gear to rotate.

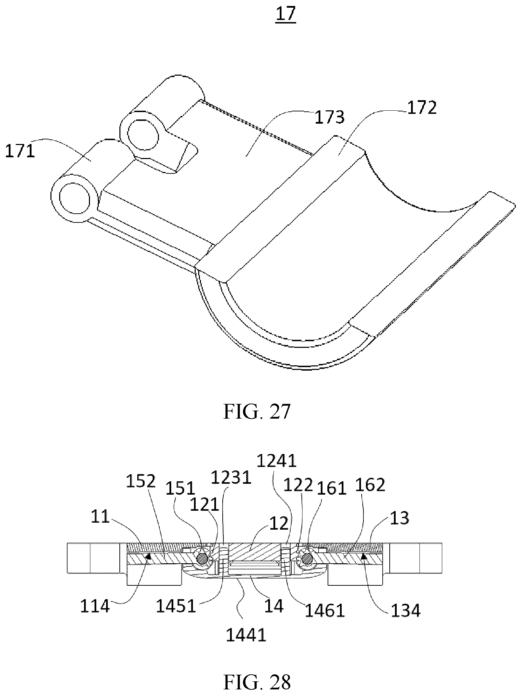

FIG. 27 is a diagram of the first hinge connecting rod 17 of the foldable apparatus according to an implementation of this application. Refer to FIG. 27. The first hinge connecting rod 17 includes a first shaft hole 171, a connecting arm 173, and a first rotating arm 172 that are integrally interconnected. In an implementation, the connecting arm 173 is of a plate-shaped structure, and the connecting arm 173 is fastened between the first shaft hole 171 and the first rotating arm 172. The first shaft hole 171 may be of a sleeve-shaped structure, and the first shaft hole 171 is configured to match a pin shaft (the pin shaft is inserted into a sleeve-shaped first shaft and is fastened to the first shaft), to rotatably connect the first hinge connecting rod 17 to the first support plate 11. The first rotating arm 172 is of an arc-shaped arm structure, and a virtual hinge of the first rotating arm 172 is located in a center position of the arc-shaped arm.

A specific structure of the second hinge connecting rod 18 is similar to a specific structure of the first hinge connecting rod 17. Details are not described.

Refer to FIG. 11 and FIG. 12. An assembly process of the foldable apparatus 10 according to an implementation of this application is described. This application is not limited to the following sequence. For a specific assembly process, a sequence of steps may be adjusted.

In a first step, the middle support plate 12 is assembled in the accommodation space 142 of the main shaft 14. Specifically, position limiting on a sliding connection between the middle support plate 12 and the main shaft 14 in the first direction A1 is implemented through matching of the first sliding matching structure 123 on the middle support plate 12 and the first position-limiting structure 145 on the main shaft 14, and through matching of the second sliding matching structure 124 on the middle support plate 12 and the second position-limiting structure 146 on the main shaft 14.

In a second step, the first gear connecting rod 15 is assembled in the first gear base 147 of the main shaft 14. Specifically, the first gear shaft 153 of the first gear connecting rod 15 is rotatably connected to the main shaft 14, for example, a hinge connection between the first gear connecting rod 15 and the main shaft 14 may be implemented by using a pin shaft. After the first gear shaft 153 is assembled, a tooth-to-tooth meshing relationship is formed between the first gear 151 and the first tooth part 121 on the middle support plate 12. The second gear connecting rod 16 is assembled in the second gear base 148 of the main shaft 14 in a same manner, to implement a meshing relationship between the second gear 161 and the second tooth part 122 on the middle support plate 12.

In a third step, the first additional shaft 191, the first elastic component 192, and the second cam structure 194 are integrally assembled to form an energy storage mechanism, and the energy storage mechanism is assembled to a position of the first shaft slot 1413 of the main shaft 14, so that the second cam structure 194 matches the first cam structure 154, the first elastic component 192 stores or releases elastic potential energy in a process in which the first gear 151 rotates relative to the main shaft 14, and the elastic potential energy is used to drive the first gear 151 to rotate. The second additional shaft, the second elastic component, and the cam structure connected to the second additional shaft can be assembled by using a same method, an energy storage mechanism formed by the second additional shaft, the second elastic component, and the cam structure connected to the second additional shaft can be assembled to a position of the second shaft slot 1414, and it is ensured that the cam structure on the second additional shaft matches the cam structure corresponding to one end of the second shaft on the second gear connecting rod 16, so that the second elastic component stores or releases elastic potential energy in a process in which the second gear rotates relative to the main shaft, and the elastic potential energy is used to drive the second gear to rotate.

In a fourth step, the first hinge connecting rod 17 is assembled to the first support plate 11. A pin shaft passes through the first shaft hole 171 and the first shaft hole 1152 on the first support plate 11, so that the first hinge connecting rod 17 is rotatably connected to the rotatable connection part 115. The second hinge connecting rod 18 can be rotatably connected to the second support plate 13 in a same manner.

In a fifth step, the first support plate 11 is connected to the main shaft 14. Specifically, the first connecting rod 152 of the first gear connecting rod 15 is inserted into the first connecting rod sliding slot 114 of the first support plate 11, so that the first connecting rod 152 matches the first connecting rod sliding slot 114 of the first support plate 11. In addition, the first rotating arm 172 of the first hinge connecting rod 17 is inserted into the first arc-shaped sliding slot 1492 of the first adapter part 149 of the main shaft 14, to implement a rotatable connection between the first hinge connecting rod 17 and the main shaft 14.

In a sixth step, the second support plate 13 is connected to the main shaft, to implement a rotatable connection between the second connecting rod 162 of the second gear connecting rod 16 and the second support plate 13, and to implement a rotatable connection between the second hinge connecting rod 18 and the main shaft.

Assembly of the foldable apparatus can be completed by using the foregoing steps. The foldable apparatus is assembled into a modular structure. Refer to FIG. 4. The first main body 101 of the electronic device is then fastened to the first support plate 11, and the second main body 102 of the electronic device is fastened to the second support plate 13.

Next, different sectional views are used to show matching relationships between structures of the foldable apparatus in the unfolded and folded states. FIG. 28, FIG. 29, FIG. 30, and FIG. 31 each are a sectional view of the foldable apparatus 10 according to an implementation of this application.

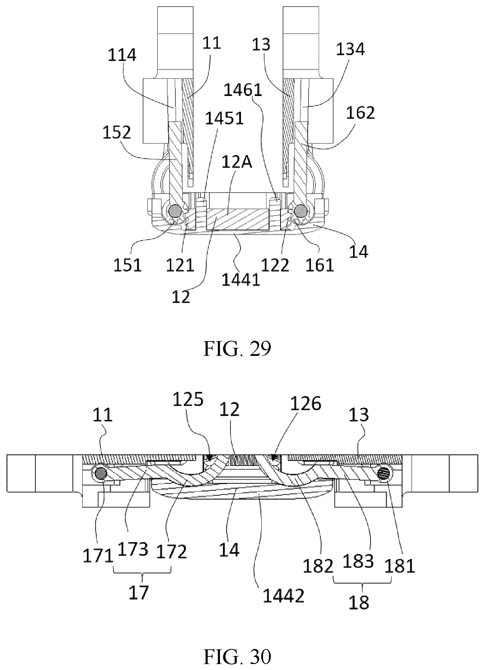

FIG. 28 is a diagram of a sectional position of the first gear connecting rod 15 of the foldable apparatus in the unfolded state, and FIG. 29 is a diagram of the sectional position shown in FIG. 28 in the folded state. Refer to FIG. 28. When the foldable apparatus is in the unfolded state, the first guiding hole 1231 is located at the top of the first guiding column 1451 (namely, a position in which the first guiding column 1451 is adjacent to the open end 143 of the accommodation part 141 of the main shaft 14), and the second guiding hole 1241 is located at the top of the second guiding column 1461. There is a gap between the middle support plate 12 and the main shaft 14, and the gap is only configured to provide a movement stroke of the middle support plate 12 in the process of switching between the unfolded and folded states, that is, in the thickness direction of the foldable apparatus, no synchronous rotation mechanism (such as a synchronous gear) is disposed between the middle support plate 12 and the main shaft 14. In the unfolded state, in the second direction A2, the first gear 151 is located between the first connecting rod 152 and the middle support plate 12, and the second gear 161 is located between the second connecting rod 162 and the middle support plate 12. The first support plate 11, the middle support plate 12, and the second support plate 13 jointly limit a surface for supporting the flexible display. In the unfolded state, the first connecting rod 152, the first gear 151, the middle support plate 12, the second gear 161, and the second connecting rod 162 are sequentially connected to form an architecture similar to a plate shape. Refer to FIG. 29. When the foldable apparatus is in the folded state, the first guiding hole 1231 is located at the bottom of the first guiding column 1451 (namely, a position in which the first guiding column 1451 is adjacent to the bottom wall 144 of the accommodation part 141 of the main shaft 14), and the second guiding hole 1241 is located at the bottom of the second guiding column 1461. The middle support plate 12 is adjacent to the main shaft 14, and it can be understood as that the middle support plate 12 and the main shaft 14 may be in a fitting relationship, or may maintain a small gap. In this application, the middle support plate 12 and the main shaft 14 may be integrally connected by using a design in which the middle support plate 12 is in contact with the main shaft 14 in the folded state. This ensures strength of the foldable apparatus. In the process of switching from the unfolded state to the folded state, the first connecting rod 152 slides relative to the first support plate 11 in the first connecting rod sliding slot 114, and the second connecting rod 162 slides relative to the second support plate 13 in the second connecting rod sliding slot 134. In the folded state, the first connecting rod 152, the first gear 151, the middle support plate 12, the second gear 161, and the second connecting rod 162 are sequentially connected to form a U-shaped architecture. To be specific, the first connecting rod 152 and the second connecting rod 162 are disposed opposite to each other and spaced, the first support plate 11 and the second support plate 13 are also disposed opposite to each other and spaced, the first support plate 11 is configured to connect to the first main body of the electronic device, and the second support plate 13 is configured to connect to the second main body of the electronic device. The space formed between the first support plate 11 and the second support plate 13 may be used to accommodate the third main body of the electronic device.

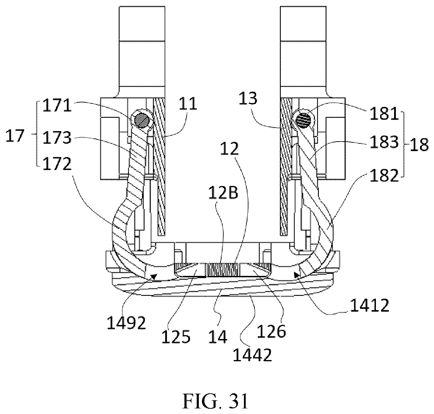

FIG. 30 is a diagram of a sectional position of the first hinge connecting rod 17 of the foldable apparatus in the unfolded state, and FIG. 31 is a diagram of the sectional position shown in FIG. 30 in the folded state. Refer to FIG. 30. The second hinge connecting rod 18 includes a second shaft 181, a second connecting arm 183, and a second rotating arm 182. The second connecting arm 183 is connected between the second shaft 181 and the second rotating arm 182. The first shaft hole 171 of the first hinge connecting rod 17 is rotatably connected to the first support plate 11 by using the pin shaft, and the second shaft 181 of the second hinge connecting rod 18 is rotatably connected to second support plate 13 by using a pin shaft. A part of the first rotating arm 172 is located in the first opening 125 of the second part 12B of the middle support plate 12, and a part of the second rotating arm 182 is located in the second opening 126 of the second part of the middle support plate 12. The part of the first rotating arm 172 and a top surface of the middle support plate 12 are coplanar, the part of the second rotating arm 182 and the top surface of the middle support plate 12 are coplanar, the first rotating arm 172 fills the first opening 125, and the second rotating arm 182 fills the second opening 126. In this way, the first rotating arm 172 and the second rotating arm 182 may also be configured to support the flexible display. The first rotating arm 172 is located in the first arc-shaped sliding slot 1492 of the main shaft 14, and the second rotating arm 182 is located in the second arc-shaped sliding slot 1412 of the main shaft 14. In the process of switching from the unfolded state to the folded state, the first rotating arm 172 slides in the first arc-shaped sliding slot 1492, and the second rotating arm 182 slides in the second arc-shaped sliding slot 1412. In the folded state, refer to FIG. 31. The middle support plate 12 moves to be in contact with the main shaft 14, the first rotating arm 172 moves away from the first opening 125, and the second rotating arm 182 moves away from the second opening 126, so that both the first opening 125 and the second opening 126 are in a vacant state. A part of the first arc-shaped sliding slot 1492 is also in a vacant state (that is, the first rotating arm 172 is not accommodated in the part of the first arc-shaped sliding slot 1492), a part of the second arc-shaped sliding slot 1412 is also in a vacant state (that is, the second rotating arm 182 is not accommodated in the second arc-shaped sliding slot 1412).

Refer to FIG. 29 and FIG. 31. The bottom wall 144 of the accommodation part 141 includes the first bottom part 1441 and the second bottom part 1442, and the thickness of the first bottom part 1441 is less than the thickness of the second bottom part 1442. The middle support plate 12 includes the first part 12A and the second part 12B, and the thickness of the first part 12A is greater than the thickness of the second part 12B. The thickness defined herein is a size of the foldable apparatus in the first direction A1. In the folded state, the first bottom part 1441 is in contact with the first part 12A of the middle support plate 12, and the second bottom part 1442 is in contact with the second part 12B of the middle support plate 12. In this application, the thicknesses of the first bottom part 1441 and the second bottom part 1442 are set to be different, and the thicknesses of the first part 12A and the second part 12B are set to be different, but in the folded state, a combined thickness of the first bottom part 1441 and the first part 12A may be equal to a combined thickness of the second bottom part 1442 and the second part 12B, so that good strength can be obtained while saving size space of the foldable apparatus.

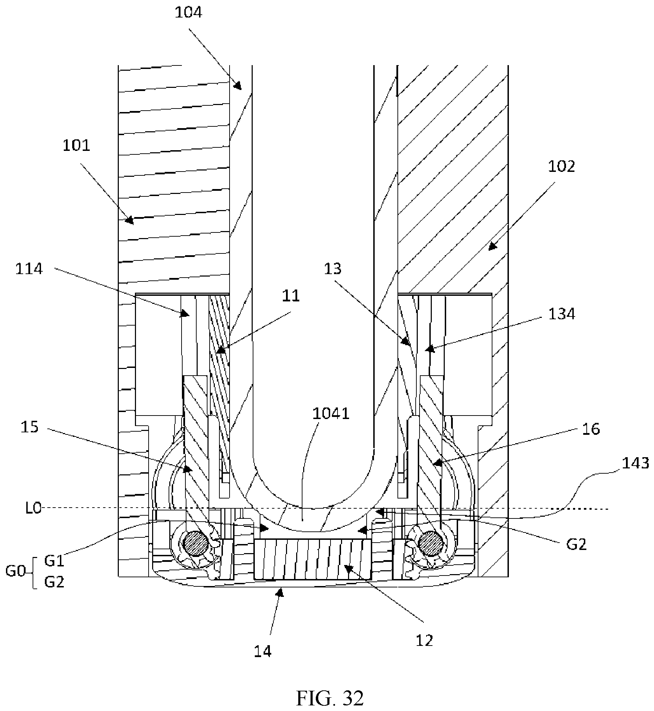

FIG. 32 is a diagram in which the foldable apparatus in the folded state is combined with the flexible display, the first main body, and the second main body according to an implementation of this application. Refer to FIG. 32. The first main body 101 is fastened to the first support plate 11, and the second main body 102 is fastened to the second support plate 13. In the folded state, the first main body 101 and the second main body 102 are disposed opposite to each other, the main shaft 14 is connected between the first main body 101 and the second main body 102, and a part of an outer surface of the main shaft 14 forms the outer surface of the electronic device. When the electronic device shown in FIG. 32 is in the unfolded state, the first main body 101 shields a part of the main shaft 14, the second main body 102 shields a part of the main shaft 14, and the first main body 101 and the second main body 102 may be in contact with each other in a middle position of the main shaft 14. This design enables the electronic device to have a complete appearance in the unfolded state, and there is no gap between the first main body 101 and the second main body 102. This improves the customer experience. A partial region of the flexible display 104 is fastened to the first main body 101, and a partial region of the flexible display 104 is fastened to the second main body 102. When the electronic device is in the folded state, the flexible display 104 is in contact with the first support plate 11, and the flexible display 104 is in contact with the second support plate 13. The flexible display 104 has a bent part 1041, and a gap is formed between the bent part 1041 and the middle support plate 12, that is, the middle support plate 12 is not in contact with the flexible display 104, which can be understood as that the middle support plate 12 reserves sufficient avoidance space for the bent part 1041 of the flexible display 104, so that the bent part 1041 of the flexible display 104 can be naturally bent without restriction. As shown in FIG. 32, according to the foldable apparatus provided in the implementation of this application, in the folded state, the middle support plate 12 is in the accommodation space 142 of the accommodation part 141 of the main shaft 14, and avoidance space G0 is formed between the middle support plate 12 and the open end 143 of the accommodation part 141. The avoidance space G0 is used to accommodate the flexible display (namely, the bent part 1041), a first gap G1 and a second gap G2 formed between the bent part 1041 and the middle support plate 12 are both located inside the main shaft 14, and both the first gap G1 and the second gap G2 are a part of the avoidance space G0. It can be understood as that, in FIG. 32, a part below a position in which a dashed line L0 is located is all internal space of the main shaft 14, and the dashed line L0 may be a position of the open end 143 of the accommodation part 141 of the main shaft 14. Since the bent part 1041 of the flexible display extends into the internal space of the main shaft 14 in the folded state, both the first gap G1 and the second gap G2 between the bent part 1041 and the middle support plate 12 fall into the accommodation space 142 of the main shaft 14. In this way, the first gap G1 and the second gap G2 between the bent part 1041 and the middle support plate 12 cannot be seen from outside of the electronic device, so that no hole is generated in a folding position of the electronic device in the folded state, and the customer experience is good.

First, second, third, fourth, and various numbers in this specification are merely used for differentiation for ease of description, and are not construed as a limitation on the scope of this application.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

The foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions of embodiments of this application.

## Claims

1. A foldable electronic device, comprising a foldable apparatus (10) and a flexible display (104), wherein the foldable apparatus (10) is configured to implement relative folding and unfolding of the electronic device, wherein the foldable apparatus comprises a first support plate (11), a middle support plate (12), a second support plate (13), a main shaft (14), a first hinge connecting rod (17), a second hinge connecting rod (18), a first gear connecting rod (15), and a second gear connecting rod (16);
the first support plate (11) and the second support plate (13) are distributed on two sides of the main shaft (14), one end of the first hinge connecting rod (17) is rotatably connected to the first support plate (11), the other end of the first hinge connecting rod (17) is rotatably connected to the main shaft (14), one end of the second hinge connecting rod (18) is rotatably connected to the second support plate (13), and the other end of the second hinge connecting rod (18) is rotatably connected to the main shaft (14);
the middle support plate (12) is slidably connected to the main shaft (14), the middle support plate (12) comprises a first tooth part (121) and a second tooth part (122), when the foldable apparatus is in an unfolded state, the first tooth part (121) faces the first support plate (11), and the second tooth part (122) faces the second support plate (13), and the first support plate (11), the middle support plate (12), and the second support plate (13) are jointly configured to support the flexible display (104) in the unfolded state;
the first gear connecting rod (15) comprises a first gear (151) and a first connecting rod (152), the first gear (151) is rotatably connected to the main shaft (14), the first gear (151) is meshed with the first tooth part (121) of the middle support plate (12), and the first connecting rod (152) is slidably connected to the first support plate (11);
the second gear connecting rod (16) comprises a second gear (161) and a second connecting rod (162), the second gear (161) is rotatably connected to the main shaft (14), the second gear (161) is meshed with the second tooth part (122) of the middle support plate (12), and the second connecting rod (162) is slidably connected to the second support plate (13);
a first rotation axis of the first hinge connecting rod (17) relative to the main shaft (14) and a second rotation axis that is of the first gear (151) of the first gear connecting rod (15) and that is relative to the main shaft (14) are different and parallel to each other;
a third rotation axis of the second hinge connecting rod (18) relative to the main shaft (14) and a fourth rotation axis that is of the second gear (161) of the second gear connecting rod (16) and that is relative to the main shaft (14) are different and parallel to each other; and
in a process in which the first support plate (11) and the second support plate (13) are relatively folded, the first hinge connecting rod (17) and the second hinge connecting rod (18) rotate relative to the main shaft (14), the first support plate (11) slides relative to the first connecting rod (152), the second support plate (13) slides relative to the second connecting rod (162), the first gear (151) is meshed with the first tooth part (121), and the second gear (161) is meshed with the second tooth part (122), so that the middle support plate (12) slides relative to the main shaft (14), wherein a sliding direction is a direction in which the middle support plate (12) is away from the flexible display (104).

2. The foldable electronic device according to claim 1, wherein in a process in which the first support plate (11) and the second support plate (13) are relatively unfolded, the first hinge connecting rod (17) and the second hinge connecting rod (18) rotate relative to the main shaft (14), the first support plate (11) slides relative to the first connecting rod (152), the second support plate (13) slides relative to the second connecting rod (162), the first gear (151) is meshed with the first tooth part (121), and the second gear (161) is meshed with the second tooth part (122), so that the middle support plate (12) slides relative to the main shaft (14), wherein a sliding direction is a direction in which the middle support plate (12) faces the flexible display (104).

3. The foldable electronic device according to claim 1 or 2, wherein the first hinge connecting rod (17) comprises a first rotating arm (172), the first rotating arm (172) is of an arc-shaped structure, the main shaft (14) comprises a first arc-shaped sliding slot (1492), and the first rotating arm (172) matches the first arc-shaped sliding slot (1492), to implement a rotatable connection between the first hinge connecting rod (17) and the main shaft (14).

4. The foldable electronic device according to claim 3, wherein the first hinge connecting rod (17) comprises a shaft hole (171), and the first hinge connecting rod (17) is rotatably connected to the first support plate (11) through the shaft hole (171) and a first shaft passing through the shaft hole (171).

5. The foldable electronic device according to any one of claims 1 to 4, wherein in a folded state of the foldable apparatus, space is formed between the first support plate (11) and the second support plate (13), so that the flexible display (104) is U-shaped in space enclosed by the first support plate (11), the middle support plate (12), and the second support plate (13).

6. The foldable electronic device according to any one of claims 1 to 5, wherein the main shaft (14) comprises an accommodation part (141), accommodation space (142) is disposed in the accommodation part (141), the accommodation space (142) is used to accommodate the middle support plate (12), the accommodation part (141) comprises an open end (143) and a bottom wall (144), the open end (143) and the bottom wall (144) are disposed opposite to each other in a first direction, the first direction is a thickness direction of the foldable apparatus in the unfolded state, and in the folded state, the middle support plate (12) is in the accommodation space (142), avoidance space is formed between the middle support plate (12) and the open end (143), and the avoidance space is used to accommodate a part of the flexible display (104).

7. The foldable electronic device according to claim 6, wherein the second rotation axis is closer to the bottom wall (144) than the first rotation axis, and the fourth rotation axis is closer to the bottom wall (144) than the third rotation axis; and
wherein in the folded state, the middle support plate (12) is in contact with the bottom wall (144).

8. The foldable electronic device according to claim 6 or 7, wherein the first direction is a thickness direction of the middle support plate (12), the middle support plate (12) comprises a first part (12A) and a second part (12B), a thickness of the first part (12A) is greater than a thickness of the second part (12B), the first part (12A) and the second part (12B) are disposed adjacently in a length direction of the middle support plate (12), the first tooth part (121) and the second tooth part (122) are disposed at the first part (12A), the first tooth part (121) and the second tooth part (122) are disposed back to back in a width direction of the middle support plate (12), and both the length direction and the width direction of the middle support plate (12) are perpendicular to the first direction.

9. The foldable electronic device according to claim 8, wherein the bottom wall (144) comprises a first bottom part (1441) and a second bottom part (1442), and in the folded state, the first bottom part (1441) is in contact with the first part (12A), the second bottom part (1442) is in contact with the second part (12B), the first direction is a thickness direction of the bottom wall (144), a thickness of the first bottom part (1441) is less than a thickness of the second bottom part (1442), and a step-shaped structure is formed between a surface that is of the first bottom part (1441) and that is in contact with the first part (12A) and a surface that is of the second bottom part (1442) and that is in contact with the second part (12B).

10. The foldable electronic device according to claim 8, wherein a first position-limiting structure (145) and a second position-limiting structure (146) are further disposed on the main shaft (14); and
in the width direction of the middle support plate (12), the first part (12A) comprises a first matching part (12A1), a main body (12A2), and a second matching part (12A3) that are sequentially connected, the first tooth part (121) is located on a surface that is of the first matching part (12A1) and that is away from the main body (12A2), the second tooth part (122) is located on a surface that is of the second matching part (12A3) and that is away from the main body (12A2), the main body (12A2) and the second part (12B) are connected and have an equal width, the first part (12A) comprises a first sliding matching structure (123) and a second sliding matching structure (124), the first sliding matching structure (123) is located in a position in which the first matching part (12A1) is adjacent to the main body (12A2) or is located in the first matching part (12A1), the second sliding matching structure (124) is located in a position in which the second matching part (12A3) is adjacent to the main body (12A2) or is located in the second matching part (12A3), the first sliding matching structure (123) is configured to match the first position-limiting structure (145), and the second sliding matching structure (124) is configured to match the second position-limiting structure (146), to perform position limiting on relative sliding between the middle support plate (12) and the main shaft (14).

11. The foldable electronic device according to claim 10, wherein the first sliding matching structure (123) comprises a first guiding hole (1231), the second sliding matching structure (124) comprises a second guiding hole (1241), the first position-limiting structure (145) comprises a first guiding column (1451), the second position-limiting structure (146) comprises a second guiding column (1461), the first guiding hole (1231) matches the first guiding column(1451), and the second guiding hole (1241) matches the second guiding column (1461).

12. The foldable electronic device according to claim 11, wherein the first sliding matching structure (123) further comprises two first sliding slots (1232), the second sliding matching structure (124) further comprises two second sliding slots (1242), in the length direction of the middle support plate (12), the two first sliding slots (1232) are distributed on two sides of the first guiding hole (1231), and the two second sliding slots (1242) are distributed on two sides of the second guiding hole (1241), the two first sliding slots (1232) and the two second sliding slots (1242) form openings in edge positions of the first part (12A), the first position-limiting structure (145) further comprises two first position-limiting columns (1452), the second position-limiting structure (146) further comprises two second position-limiting columns (1462), in a length direction of the main shaft (14), the two first position-limiting columns (1452) are distributed on two sides of the first guiding column(1451), and the two second position-limiting columns (1462) are distributed on two sides of the second guiding column (1461), the two first position-limiting columns (1452) respectively match the two first sliding slots (1232), and the two second position-limiting columns (1462) respectively match the two second sliding slots (1242).

13. The foldable electronic device according to any one of claims 8 to 12, wherein a first opening (125) is disposed at the second part (12B), in the thickness direction of the middle support plate (12), the middle support plate (12) comprises a bottom surface and a top surface that are disposed back to back, the first opening (125) penetrates the bottom surface and the top surface, the first opening (125) is used to accommodate a part of the first hinge connecting rod (17) in the unfolded state of the foldable apparatus, the first hinge connecting rod (17) comprises the first rotating arm (172) rotatably connected to the main shaft (14), the first rotating arm (172) is of the arc-shaped structure, and in the unfolded state of the foldable apparatus, one end of the first rotating arm (172) is located in the first opening (125), and a part of the first rotating arm (172) and the top surface are coplanar.

14. The foldable electronic device according to any one of claims 6 to 13, wherein the main shaft (14) comprises a first outer side surface and a second outer side surface that are disposed opposite to each other, the first outer side surface faces the first support plate (11), the second outer side surface faces the second support plate (13), the main shaft (14) further comprises a first gear base and a second gear base, the first gear base is located between the accommodation part (141) and the first outer side surface, the second gear base is located between the second outer side surface and the accommodation part (141), the first gear (151) is rotatably connected to the first gear base, and the second gear (161) is rotatably connected to the second gear base.

15. The foldable electronic device according to any one of claims 1 to 14, further comprising a first main body (101) and a second main body (102), wherein the first main body (101) is fastened to the first support plate (11), the second main body (102) is fastened to the second support plate (13), and the flexible display (104) is fastened to the first main body (101) and the second main body (102).

## Patentansprüche

1. Faltbare elektronische Vorrichtung, umfassend eine faltbare Einrichtung (10) und ein flexibles Display (104), wobei die faltbare Einrichtung (10) dazu konfiguriert ist, relatives Falten und Entfalten der elektronischen Vorrichtung umzusetzen, wobei die faltbare Einrichtung eine erste Stützplatte (11), eine mittlere Stützplatte (12), eine zweite Stützplatte (13), eine Hauptwelle (14), eine erste Gelenkverbindungsstange (17), eine zweite Gelenkverbindungsstange (18), eine erste Zahnradverbindungsstange (15) und eine zweite Zahnradverbindungsstange (16) umfasst;
die erste Stützplatte (11) und die zweite Stützplatte (13) auf zwei Seiten der Hauptwelle (14) verteilt sind, ein Ende der ersten Gelenkverbindungsstange (17) drehbar mit der ersten Stützplatte (11) verbunden ist, das andere Ende der ersten Gelenkverbindungsstange (17) drehbar mit der Hauptwelle (14) verbunden ist, ein Ende der zweiten Gelenkverbindungsstange (18) drehbar mit der zweiten Stützplatte (13) verbunden ist und das andere Ende der zweiten Gelenkverbindungsstange (18) drehbar mit der Hauptwelle (14) verbunden ist;
die mittlere Stützplatte (12) gleitbar mit der Hauptwelle (14) verbunden ist, die mittlere Stützplatte (12) einen ersten Zahnteil (121) und einen zweiten Zahnteil (122) umfasst, wenn die faltbare Einrichtung in einem entfalteten Zustand ist, der erste Zahnteil (121) der ersten Stützplatte (11) zugewandt ist und der zweite Zahnteil (122) der zweiten Stützplatte (13) zugewandt ist und die erste Stützplatte (11), die mittlere Stützplatte (12) und die zweite Stützplatte (13) gemeinsam dazu konfiguriert sind, das flexible Display (104) in dem entfalteten Zustand zu stützen;
die erste Zahnradverbindungsstange (15) ein erstes Zahnrad (151) und eine erste Verbindungsstange (152) umfasst, das erste Zahnrad (151) drehbar mit der Hauptwelle (14) verbunden ist, das erste Zahnrad (151) mit dem ersten Zahnteil (121) der mittleren Stützplatte (12) in Eingriff ist und die erste Verbindungsstange (152) gleitbar mit der ersten Stützplatte (11) verbunden ist; die zweite Zahnradverbindungsstange (16) ein zweites Zahnrad (161) und eine zweite Verbindungsstange (162) umfasst, das zweite Zahnrad (161) drehbar mit der Hauptwelle (14) verbunden ist, das zweite Zahnrad (161) mit dem zweiten Zahnteil (122) der mittleren Stützplatte (12) in Eingriff ist und die zweite Verbindungsstange (162) gleitbar mit der zweiten Stützplatte (13) verbunden ist;
eine erste Drehachse der ersten Gelenkverbindungsstange (17) relativ zu der Hauptwelle (14) und eine zweite Drehachse, die zu dem ersten Zahnrad (151) der ersten Zahnradverbindungsstange (15) gehört und die relativ zu der Hauptwelle (14) ist, verschieden und parallel zueinander sind;
eine dritte Drehachse der zweiten Gelenkverbindungsstange (18) relativ zu der Hauptwelle (14) und eine vierte Drehachse, die zu dem zweiten Zahnrad (161) der zweiten Zahnradverbindungsstange (16) gehört und die relativ zu der Hauptwelle (14) ist, verschieden und parallel zueinander sind; und
bei einem Vorgang, bei dem die erste Stützplatte (11) und die zweite Stützplatte (13) relativ zueinander gefaltet sind, sich die erste Gelenkverbindungsstange (17) und die zweite Gelenkverbindungsstange (18) relativ zu der Hauptwelle (14) drehen, die erste Stützplatte (11) relativ zu der ersten Verbindungsstange (152) gleitet, die zweite Stützplatte (13) relativ zu der zweiten Verbindungsstange (162) gleitet, das erste Zahnrad (151) mit dem ersten Zahnteil (121) in Eingriff ist und das zweite Zahnrad (161) mit dem zweiten Zahnteil (122) in Eingriff ist, sodass die mittlere Stützplatte (12) relativ zu der Hauptwelle (14) gleitet, wobei eine Gleitrichtung eine Richtung ist, in der die mittlere Stützplatte (12) von dem flexiblen Display (104) entfernt ist.

2. Faltbare elektronische Vorrichtung nach Anspruch 1, wobei bei einem Vorgang, bei dem die erste Stützplatte (11) und die zweite Stützplatte (13) relativ zueinander entfaltet sind, sich die erste Gelenkverbindungsstange (17) und die zweite Gelenkverbindungsstange (18) relativ zu der Hauptwelle (14) drehen, die erste Stützplatte (11) relativ zu der ersten Verbindungsstange (152) gleitet, die zweite Stützplatte (13) relativ zu der zweiten Verbindungsstange (162) gleitet, das erste Zahnrad (151) mit dem ersten Zahnteil (121) in Eingriff ist und das zweite Zahnrad (161) mit dem zweiten Zahnteil (122) in Eingriff ist, sodass die mittlere Stützplatte (12) relativ zu der Hauptwelle (14) gleitet, wobei eine Gleitrichtung eine Richtung ist, in der die mittlere Stützplatte (12) dem flexiblen Display (104) zugewandt ist.

3. Faltbare elektronische Vorrichtung nach Anspruch 1 oder 2, wobei die erste Gelenkverbindungsstange (17) einen ersten Dreharm (172) umfasst, der erste Dreharm (172) eine bogenförmige Struktur aufweist, die Hauptwelle (14) einen ersten bogenförmigen Gleitschlitz (1492) umfasst und der erste Dreharm (172) in den ersten bogenförmigen Gleitschlitz (1492) passt, um eine drehbare Verbindung zwischen der ersten Gelenkverbindungsstange (17) und der Hauptwelle (14) umzusetzen.

4. Faltbare elektronische Vorrichtung nach Anspruch 3, wobei die erste Gelenkverbindungsstange (17) eine Wellenbohrung (171) umfasst und die erste Gelenkverbindungsstange (17) über die Wellenbohrung (171) und eine erste Welle, die durch die Wellenbohrung (171) verläuft, drehbar mit der ersten Stützplatte (11) verbunden ist.

5. Faltbare elektronische Vorrichtung nach einem der Ansprüche 1 bis 4, wobei in einem gefalteten Zustand der faltbaren Einrichtung ein Raum zwischen der ersten Stützplatte (11) und der zweiten Stützplatte (13) ausgebildet wird, sodass das flexible Display (104) in einem durch die erste Stützplatte (11), die mittlere Stützplatte (12) und die zweite Stützplatte (13) umschlossenen Raum U-förmig ist.

6. Faltbare elektronische Vorrichtung nach einem der Ansprüche 1 bis 5, wobei die Hauptwelle (14) einen Aufnahmeteil (141) umfasst, ein Aufnahmeraum (142) in dem Aufnahmeteil (141) angeordnet ist, der Aufnahmeraum (142) dazu verwendet wird, die mittlere Stützplatte (12) aufzunehmen, der Aufnahmeteil (141) ein offenes Ende (143) und eine Bodenwand (144) umfasst, wobei das offene Ende (143) und die Bodenwand (144) einander in einer ersten Richtung gegenüberliegend angeordnet sind, die erste Richtung eine Dickenrichtung der faltbaren Einrichtung in dem entfalteten Zustand ist und in dem gefalteten Zustand die mittlere Stützplatte (12) in dem Aufnahmeraum (142) ist, ein Vermeidungsraum zwischen der mittleren Stützplatte (12) und dem offenen Ende (143) ausgebildet ist und der Vermeidungsraum dazu verwendet wird, einen Teil des flexiblen Displays (104) aufzunehmen.

7. Faltbare elektronische Vorrichtung nach Anspruch 6, wobei die zweite Drehachse näher an der Bodenwand (144) liegt als die erste Drehachse und die vierte Drehachse näher an der Bodenwand (144) liegt als die dritte Drehachse; und
wobei in dem gefalteten Zustand die mittlere Stützplatte (12) mit der Bodenwand (144) in Kontakt steht.

8. Faltbare elektronische Vorrichtung nach Anspruch 6 oder 7, wobei die erste Richtung eine Dickenrichtung der mittleren Stützplatte (12) ist, die mittlere Stützplatte (12) einen ersten Teil (12A) und einen zweiten Teil (12B) umfasst, eine Dicke des ersten Teils (12A) größer ist als die Dicke des zweiten Teils (12B), der erste Teil (12A) und der zweite Teil (12B) in einer Längsrichtung der mittleren Stützplatte (12) aneinandergrenzend angeordnet sind, der erste Zahnteil (121) und der zweite Zahnteil (122) an dem ersten Teil (12A) angeordnet sind, der erste Zahnteil (121) und der zweite Zahnteil (122) in einer Breitenrichtung der mittleren Stützplatte (12) Rücken an Rücken angeordnet sind und sowohl die Längsrichtung als auch die Breitenrichtung der mittleren Stützplatte (12) senkrecht zu der ersten Richtung verlaufen.

9. Faltbare elektronische Vorrichtung nach Anspruch 8, wobei die Bodenwand (144) einen ersten Bodenteil (1441) und einen zweiten Bodenteil (1442) umfasst und in dem gefalteten Zustand der erste Bodenteil (1441) mit dem ersten Teil (12A) in Kontakt steht, der zweite Bodenteil (1442) mit dem zweiten Teil (12B) in Kontakt steht, die erste Richtung eine Dickenrichtung der Bodenwand (144) ist, eine Dicke des ersten Bodenteils (1441) geringer ist als eine Dicke des zweiten Bodenteils (1442) und eine stufenförmige Struktur zwischen einer Oberfläche, die zu dem ersten Bodenteil (1441) gehört und die mit dem ersten Teil (12A) in Kontakt steht, und einer Oberfläche, die zu dem zweiten Bodenteil (1442) gehört und die mit dem zweiten Teil (12B) in Kontakt steht, ausgebildet ist.

10. Faltbare elektronische Vorrichtung nach Anspruch 8, wobei eine erste Positionsbegrenzungsstruktur (145) und eine zweite Positionsbegrenzungsstruktur (146) ferner auf der Hauptwelle (14) angeordnet sind; und
in der Breitenrichtung der mittleren Stützplatte (12) der erste Teil (12A) einen ersten Passteil (12A1), einen Hauptkörper (12A2) und einen zweiten Passteil (12A3), die nacheinander verbunden sind, umfasst, sich der erste Zahnteil (121) auf einer Fläche, die zu dem ersten Passteil (12A1) gehört und die von dem Hauptkörper (12A2) entfernt ist, befindet, sich der zweite Zahnteil (122) auf einer Fläche, die zu dem zweiten Passteil (12A3) gehört und die von dem Hauptkörper (12A2) entfernt ist, befindet, der Hauptkörper (12A2) und der zweite Teil (12B) verbunden sind und eine gleiche Breite aufweisen, der erste Teil (12A) eine erste Gleitpassstruktur (123) und eine zweite Gleitpassstruktur (124) umfasst, sich die erste Gleitpassstruktur (123) in einer Position, in welcher der erste Passteil (12A1) benachbart zu dem Hauptkörper (12A2) ist, befindet oder sich in dem ersten Passteil (12A1) befindet, sich die zweite Gleitpassstruktur (124) in einer Position, in welcher der zweite Passteil (12A3) benachbart zu dem Hauptkörper (12A2) ist, befindet oder sich in dem zweiten Passteil (12A3) befindet, die erste Gleitpassstruktur (123) dazu konfiguriert ist, zu der ersten Positionsbegrenzungsstruktur (145) zu passen, und die zweite Gleitpassstruktur (124) dazu konfiguriert ist, zu der zweiten Positionsbegrenzungsstruktur (146) zu passen, um eine Positionsbegrenzung beim relativen Gleiten zwischen der mittleren Stützplatte (12) und der Hauptwelle (14) durchzuführen.

11. Faltbare elektronische Vorrichtung nach Anspruch 10, wobei die erste Gleitpassstruktur (123) ein erstes Führungsloch (1231) umfasst, die zweite Gleitpassstruktur (124) ein zweites Führungsloch (1241) umfasst, die erste Positionsbegrenzungsstruktur (145) eine erste Führungssäule (1451) umfasst, die zweite Positionsbegrenzungsstruktur (146) eine zweite Führungssäule (1461) umfasst, das erste Führungsloch (1231) zu der ersten Führungssäule (1451) passt und das zweite Führungsloch (1241) zu der zweiten Führungssäule (1461) passt.

12. Faltbare elektronische Vorrichtung nach Anspruch 11, wobei die erste Gleitpassstruktur (123) ferner zwei erste Gleitschlitze (1232) umfasst, die zweite Gleitpassstruktur (124) ferner zwei zweite Gleitschlitze (1242) umfasst, in der Längsrichtung der mittleren Stützplatte (12) die beiden ersten Gleitschlitze (1232) auf zwei Seiten des ersten Führungslochs (1231) verteilt sind und die beiden zweiten Gleitschlitze (1242) auf zwei Seiten des zweiten Führungslochs (1241) verteilt sind, die beiden ersten Gleitschlitze (1232) und die beiden zweiten Gleitschlitze (1242) Öffnungen an Randpositionen des ersten Teils (12A) ausbilden, die erste Positionsbegrenzungsstruktur (145) ferner zwei erste Positionsbegrenzungssäulen (1452) umfasst und die zweite Positionsbegrenzungsstruktur (146) ferner zwei zweite Positionsbegrenzungssäulen (1462) umfasst, in einer Längsrichtung der Hauptwelle (14) die beiden ersten Positionsbegrenzungssäulen (1452) auf zwei Seiten der ersten Führungssäule (1451) verteilt sind und die beiden zweiten Positionsbegrenzungssäulen (1462) auf zwei Seiten der zweiten Führungssäule (1461) verteilt sind, die beiden ersten Positionsbegrenzungssäulen (1452) jeweils zu den beiden ersten Gleitschlitzen (1232) passen und die beiden zweiten Positionsbegrenzungssäulen (1462) jeweils zu den beiden zweiten Gleitschlitzen (1242) passen.

13. Faltbare elektronische Vorrichtung nach einem der Ansprüche 8 bis 12, wobei eine erste Öffnung (125) an dem zweiten Teil (12B) in der Dickenrichtung der mittleren Stützplatte (12) angeordnet ist, die mittlere Stützplatte (12) eine Bodenfläche und eine Oberfläche, die Rücken an Rücken angeordnet sind, umfasst, die erste Öffnung (125) die Bodenfläche und die Oberfläche durchdringt, in dem entfalteten Zustand der faltbaren Einrichtung die erste Öffnung (125) dazu verwendet wird, einen Teil der ersten Gelenkverbindungsstange (17) aufzunehmen, die erste Gelenkverbindungsstange (17) den ersten Dreharm (172), der drehbar mit der Hauptwelle (14) verbunden ist, umfasst, der erste Dreharm (172) die bogenförmige Struktur aufweist, sich in dem entfalteten Zustand der faltbaren Einrichtung ein Ende des ersten Dreharms (172) in der ersten Öffnung (125) befindet und ein Teil des ersten Dreharms (172) und die Oberfläche auf derselben Ebene liegen.

14. Faltbare elektronische Vorrichtung nach einem der Ansprüche 6 bis 13, wobei die Hauptwelle (14) eine erste Außenfläche und eine zweite Außenfläche, die einander gegenüberliegend angeordnet sind, umfasst, wobei die erste Außenfläche der ersten Stützplatte (11) zugewandt ist, die zweite Außenfläche der zweiten Stützplatte (13) zugewandt ist, die Hauptwelle (14) ferner einen ersten Zahnradsockel und einen zweiten Zahnradsockel umfasst, sich der erste Zahnradsockel zwischen dem Aufnahmeteil (141) und der ersten Außenfläche befindet und sich der zweite Zahnradsockel zwischen der zweiten Außenfläche und dem Aufnahmeteil (141) befindet, das erste Zahnrad (151) drehbar mit dem ersten Zahnradsockel verbunden ist und das zweite Zahnrad (161) drehbar mit dem zweiten Zahnradsockel verbunden ist.

15. Faltbare elektronische Vorrichtung nach einem der Ansprüche 1 bis 14, ferner umfassend einen ersten Hauptkörper (101) und einen zweiten Hauptkörper (102), wobei der erste Hauptkörper (101) an der ersten Stützplatte (11) befestigt ist, der zweite Hauptkörper (102) an der zweiten Stützplatte (13) befestigt ist und das flexible Display (104) an dem ersten Hauptkörper (101) und dem zweiten Hauptkörper (102) befestigt ist.

## Revendications

1. Dispositif électronique pliable, comprenant un appareil pliable (10) et un dispositif d'affichage flexible (104), dans lequel l'appareil pliable (10) est configuré pour mettre en œuvre le pliage et le dépliage relatifs du dispositif électronique, dans lequel l'appareil pliable comprend une première plaque de support (11), une plaque de support intermédiaire (12), une seconde plaque de support (13), un arbre principal (14), une première bielle de charnière (17), une seconde bielle de charnière (18), une première bielle d'engrenage (15), et une seconde bielle d'engrenage (16) ;
la première plaque de support (11) et la seconde plaque de support (13) sont réparties de part et d'autre de l'arbre principal (14), une extrémité de la première bielle de charnière (17) est reliée de manière rotative à la première plaque de support (11), l'autre extrémité de la première bielle de charnière (17) est reliée de manière rotative à l'arbre principal (14), une extrémité de la seconde bielle de charnière (18) est reliée de manière rotative à la seconde plaque de support (13), et l'autre extrémité de la seconde bielle de charnière (18) est reliée de manière rotative à l'arbre principal (14) ;
la plaque de support intermédiaire (12) est reliée de manière coulissante à l'arbre principal (14), la plaque de support intermédiaire (12) comprend une première partie dentée (121) et une seconde partie dentée (122), lorsque l'appareil pliable est dans un état déplié, la première partie dentée (121) fait face à la première plaque de support (11), et la seconde partie dentée (122) fait face à la seconde plaque de support (13), et la première plaque de support (11), la plaque de support intermédiaire (12), et la seconde plaque de support (13) sont configurées conjointement pour supporter le dispositif d'affichage flexible (104) à l'état déplié ;
la première bielle d'engrenage (15) comprend un premier engrenage (151) et une première bielle (152), le premier engrenage (151) est relié de manière rotative à l'arbre principal (14), le premier engrenage (151) est engrené avec la première partie dentée (121) de la plaque de support intermédiaire (12), et la première bielle (152) est reliée de manière coulissante à la première plaque de support (11) ;
la seconde bielle d'engrenage (16) comprend un second engrenage (161) et une seconde bielle (162), le second engrenage (161) est relié de manière rotative à l'arbre principal (14), le second engrenage (161) est engrené avec la seconde partie dentée (122) de la plaque de support intermédiaire (12), et la seconde bielle (162) est reliée de manière coulissante à la seconde plaque de support (13) ;
un premier axe de rotation de la première bielle de charnière (17) par rapport à l'arbre principal (14) et un deuxième axe de rotation du premier engrenage (151) de la première bielle d'engrenage (15) par rapport à l'arbre principal (14) sont différents et parallèles l'un à l'autre ;
un troisième axe de rotation de la seconde bielle de charnière (18) par rapport à l'arbre principal (14) et un quatrième axe de rotation du second engrenage (161) de la seconde bielle d'engrenage (16) par rapport à l'arbre principal (14) sont différents et parallèles l'un à l'autre ; et
lors d'un processus au cours duquel la première plaque de support (11) et la seconde plaque de support (13) sont pliées l'une par rapport à l'autre, la première bielle de charnière (17) et la seconde bielle de charnière (18) tournent par rapport à l'arbre principal (14), la première plaque de support (11) coulisse par rapport à la première bielle (152), la seconde plaque de support (13) coulisse par rapport à la seconde bielle (162), le premier engrenage (151) est engrené avec la première partie dentée (121), et le second engrenage (161) est engrené avec la seconde partie dentée (122), de sorte que la plaque de support intermédiaire (12) coulisse par rapport à l'arbre principal (14), dans lequel une direction de coulissement est une direction dans laquelle la plaque de support intermédiaire (12) s'éloigne du dispositif d'affichage flexible (104).

2. Dispositif électronique pliable selon la revendication 1, dans lequel lors d'un processus au cours duquel la première plaque de support (11) et la seconde plaque de support (13) sont dépliées l'une par rapport à l'autre, la première bielle de charnière (17) et la seconde bielle de charnière (18) tournent par rapport à l'arbre principal (14), la première plaque de support (11) coulisse par rapport à la première bielle (152), la seconde plaque de support (13) coulisse par rapport à la seconde bielle (162), le premier engrenage (151) est engrené avec la première partie dentée (121), et le second engrenage (161) est engrené avec la seconde partie dentée (122), de sorte que la plaque de support intermédiaire (12) coulisse par rapport à l'arbre principal (14), dans lequel une direction de coulissement est une direction dans laquelle la plaque de support intermédiaire (12) fait face au dispositif d'affichage flexible (104).

3. Dispositif électronique pliable selon la revendication 1 ou 2, dans lequel la première bielle de charnière (17) comprend un premier bras rotatif (172), le premier bras rotatif (172) présente une structure en forme d'arc, l'arbre principal (14) comprend une première fente de coulissement en forme d'arc (1492), et le premier bras rotatif (172) est accouplé à la première fente de coulissement en forme d'arc (1492), pour mettre en œuvre une liaison rotative entre la première bielle de charnière (17) et l'arbre principal (14).

4. Dispositif électronique pliable selon la revendication 3, dans lequel la première bielle de charnière (17) comprend un trou d'arbre (171), et la première bielle de charnière (17) est reliée de manière rotative à la première plaque de support (11) par l'intermédiaire du trou d'arbre (171) et d'un premier arbre passant par le trou d'arbre (171).

5. Dispositif électronique pliable selon l'une quelconque des revendications 1 à 4, dans lequel dans un état plié de l'appareil pliable, un espace est formé entre la première plaque de support (11) et la seconde plaque de support (13), de sorte que le dispositif d'affichage flexible (104) présente une forme en U dans un espace délimité par la première plaque de support (11), la plaque de support intermédiaire (12), et la seconde plaque de support (13).

6. Dispositif électronique pliable selon l'une quelconque des revendications 1 à 5, dans lequel l'arbre principal (14) comprend une partie de logement (141), un espace de logement (142) est disposé dans la partie de logement (141), l'espace de logement (142) est utilisé pour loger la plaque de support intermédiaire (12), la partie de logement (141) comprend une extrémité ouverte (143) et une paroi inférieure (144), l'extrémité ouverte (143) et la paroi inférieure (144) sont disposées l'une en face de l'autre dans une première direction, la première direction est une direction d'épaisseur de l'appareil pliable à l'état déplié, et à l'état plié, la plaque de support intermédiaire (12) se trouve dans l'espace de logement (142), un espace d'évitement est formé entre la plaque de support intermédiaire (12) et l'extrémité ouverte (143), et l'espace d'évitement est utilisé pour loger une partie du dispositif d'affichage flexible (104).

7. Dispositif électronique pliable selon la revendication 6, dans lequel le deuxième axe de rotation est plus proche de la paroi inférieure (144) que le premier axe de rotation, et le quatrième axe de rotation est plus proche de la paroi inférieure (144) que le troisième axe de rotation ; et
dans lequel à l'état plié, la plaque de support intermédiaire (12) est en contact avec la paroi inférieure (144).

8. Dispositif électronique pliable selon la revendication 6 ou 7, dans lequel la première direction est une direction d'épaisseur de la plaque de support intermédiaire (12), la plaque de support intermédiaire (12) comprend une première partie (12A) et une seconde partie (12B), une épaisseur de la première partie (12A) est supérieure à une épaisseur de la seconde partie (12B), la première partie (12A) et la seconde partie (12B) sont disposées de manière adjacente dans une direction de longueur de la plaque de support intermédiaire (12), la première partie dentée (121) et la seconde partie dentée (122) sont disposées au niveau de la première partie (12A), la première partie dentée (121) et la seconde partie dentée (122) sont disposées dos à dos dans une direction de largeur de la plaque de support intermédiaire (12), et la direction de longueur et la direction de largeur de la plaque de support intermédiaire (12) sont toutes deux perpendiculaires à la première direction.

9. Dispositif électronique pliable selon la revendication 8, dans lequel la paroi inférieure (144) comprend une première partie inférieure (1441) et une seconde partie inférieure (1442), et à l'état plié, la première partie inférieure (1441) est en contact avec la première partie (12A), la seconde partie inférieure (1442) est en contact avec la seconde partie (12B), la première direction est une direction d'épaisseur de la paroi inférieure (144), une épaisseur de la première partie inférieure (1441) est inférieure à une épaisseur de la seconde partie inférieure (1442), et une structure en forme d'escalier est formée entre une surface de la première partie inférieure (1441) en contact avec la première partie (12A) et une surface de la seconde partie inférieure (1442) en contact avec la seconde partie (12B).

10. Dispositif électronique pliable selon la revendication 8, dans lequel une première structure de limitation de position (145) et une seconde structure de limitation de position (146) sont en outre disposées sur l'arbre principal (14) ; et
dans la direction de largeur de la plaque de support intermédiaire (12), la première partie (12A) comprend une première partie d'accouplement (12A1), un corps principal (12A2), et une seconde partie d'accouplement (12A3) reliés séquentiellement, la première partie dentée (121) est située sur une surface de la première partie d'accouplement (12A1) éloignée du corps principal (12A2), la seconde partie dentée (122) est située sur une surface de la seconde partie d'accouplement (12A3) éloignée du corps principal (12A2), le corps principal (12A2) et la seconde partie (12B) sont reliés et ont une largeur égale, la première partie (12A) comprend une première structure d'accouplement coulissante (123) et une seconde structure d'accouplement coulissante (124), la première structure d'accouplement coulissante (123) est située dans une position dans laquelle la première partie d'accouplement (12A1) est adjacente au corps principal (12A2) ou est située dans la première partie d'accouplement (12A1), la seconde structure d'accouplement coulissante (124) est située dans une position dans laquelle la seconde partie d'accouplement (12A3) est adjacente au corps principal (12A2) ou est située dans la seconde partie d'accouplement (12A3), la première structure d'accouplement coulissante (123) est configurée pour s'accoupler avec la première structure de limitation de position (145), et la seconde structure d'accouplement coulissante (124) est configurée pour s'accoupler avec la seconde structure de limitation de position (146), pour réaliser une limitation de position sur le coulissement relatif entre la plaque de support intermédiaire (12) et l'arbre principal (14).

11. Dispositif électronique pliable selon la revendication 10, dans lequel la première structure d'accouplement coulissante (123) comprend un premier trou de guidage (1231), la seconde structure d'accouplement coulissante (124) comprend un second trou de guidage (1241), la première structure de limitation de position (145) comprend une première colonne de guidage (1451), la seconde structure de limitation de position (146) comprend une seconde colonne de guidage (1461), le premier trou de guidage (1231) s'accouple avec la première colonne de guidage (1451), et le second trou de guidage (1241) s'accouple avec la seconde colonne de guidage (1461).

12. Dispositif électronique pliable selon la revendication 11, dans lequel la première structure d'accouplement coulissante (123) comprend en outre deux premières fentes de coulissement (1232), la seconde structure d'accouplement coulissante (124) comprend en outre deux secondes fentes de coulissement (1242), dans la direction de longueur de la plaque de support intermédiaire (12), les deux premières fentes de coulissement (1232) sont réparties de part et d'autre du premier trou de guidage (1231), et les deux secondes fentes de coulissement (1242) sont réparties de part et d'autre du second trou de guidage (1241), les deux premières fentes de coulissement (1232) et les deux secondes fentes de coulissement (1242) forment des ouvertures en position de bord de la première partie (12A), la première structure de limitation de position (145) comprend en outre deux premières colonnes de limitation de position (1452), la seconde structure de limitation de position (146) comprend en outre deux secondes colonnes de limitation de position (1462), dans une direction de longueur de l'arbre principal (14), les deux premières colonnes de limitation de position (1452) sont réparties de part et d'autre de la première colonne de guidage (1451), et les deux secondes colonnes de limitation de position (1462) sont réparties de part et d'autre de la seconde colonne de guidage (1461), les deux premières colonnes de limitation de position (1452) s'accouplent respectivement avec les deux premières fentes de coulissement (1232), et les deux secondes colonnes de limitation de position (1462) s'accouplent respectivement avec les deux secondes fentes de coulissement (1242).

13. Dispositif électronique pliable selon l'une quelconque des revendications 8 à 12, dans lequel une première ouverture (125) est disposée au niveau de la seconde partie (12B), dans la direction d'épaisseur de la plaque de support intermédiaire (12), la plaque de support intermédiaire (12) comprend une surface inférieure et une surface supérieure disposées dos à dos, la première ouverture (125) traverse la surface inférieure et la surface supérieure, la première ouverture (125) est utilisée pour loger une partie de la première bielle de charnière (17) à l'état déplié de l'appareil pliable, la première bielle de charnière (17) comprend le premier bras rotatif (172) relié de manière rotative à l'arbre principal (14), le premier bras rotatif (172) présente une structure en forme d'arc, et à l'état déplié de l'appareil pliable, une extrémité du premier bras rotatif (172) est située dans la première ouverture (125), et une partie du premier bras rotatif (172) et la surface supérieure sont coplanaires.

14. Dispositif électronique pliable selon l'une quelconque des revendications 6 à 13, dans lequel l'arbre principal (14) comprend une première surface latérale extérieure et une seconde surface latérale extérieure disposées face à face, la première surface latérale extérieure fait face à la première plaque de support (11), la seconde surface latérale extérieure fait face à la seconde plaque de support (13), l'arbre principal (14) comprend en outre une première base d'engrenage et une seconde base d'engrenage, la première base d'engrenage est située entre la partie de logement (141) et la première surface latérale extérieure, la seconde base d'engrenage est située entre la seconde surface latérale extérieure et la partie de logement (141), le premier engrenage (151) est relié de manière rotative à la première base d'engrenage, et le second engrenage (161) est relié de manière rotative à la seconde base d'engrenage.

15. Dispositif électronique pliable selon l'une quelconque des revendications 1 à 14, comprenant en outre un premier corps principal (101) et un second corps principal (102), dans lequel le premier corps principal (101) est fixé à la première plaque de support (11), le second corps principal (102) est fixé à la seconde plaque de support (13), et le dispositif d'affichage flexible (104) est fixé au premier corps principal (101) et au second corps principal (102).
